(19) **Europäisches Patentamt / European Patent Office / Office européen des brevets**

(11) **EP 2 784 551 A2**

(12) **EUROPEAN PATENT APPLICATION**

(43) Date of publication:
01.10.2014 Bulletin 2014/40

(51) Int Cl.:
*G01V 1/28* (2006.01)

(21) Application number: 14161366.1

(22) Date of filing: 24.03.2014

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.03.2013 US 201361805259 P**

(71) Applicant: **CGG Services SA**
**91300 Massy (FR)**

(72) Inventors:
• **Nguyen, Truong**
**91300 Massy**
**(FR)**
• **Winnett, Richard**
**91300 Massy (FR)**

(74) Representative: **Regimbeau**
**20, rue de Chazelles**
**75847 Paris Cedex 17 (FR)**

(54) **System and method for interpolating seismic data by matching pursuit in fourier transform**

(57)    Methods and systems for interpolating seismic data estimate a first frequency spectrum associated with the seismic data using a matching point (MP) algorithm having a pre-computed term. A second frequency spectrum is also estimate for the seismic data, using the MP algorithm, an anti-aliasing mask and the estimated first regular frequency spectrum. From the second frequency spectrum, the interpolated seismic data can be determined by performing an inverse fast Fourier Transform thereon.

Figure 11A

Transmitting Seismic Waves (marine or land) by sources — 1102

Acquiring Transmitted Seismic Waves as Trace Data (Receiving by Receiver, Processing with Processors, and Storing in Memory) — 1104

Estimating a Regular Frequency Spectrum for Irregular Seismic Data Using a Fast Matching Point (MP) Algorithm — 1106

Determining an Anti-Aliasing Mask Based on the Estimated Regular Frequency Spectrum — 1108

Re-estimating the Regular Frequency Spectrum of the Irregular Seismic Data, Using the Fast MP Algorithm and the Anti-Aliasing Mask — 1110

Determining the 5D Interpolated Data by Performing Inverse Fast Fourier Transform on the Re-estimated, Regular Frequency Spectrum — 1112

Performing Additional Processing and/or Displaying of Interpolated Data — 1114

**(Cont. next page)**

# Figure 11B

1120

Estimate first frequency spectrum using an MP algorithm having a pre-computed term

1122

Estimate second frequency spectrum using the MP algorithm, and anti-aliasing mask and the first frequency spectrum

1124

Determine interpolated seismic data by performing an inverse fast Fourier transform on the second estimated frequency spectrum

**Description**

**PRIORITY INFORMATION**

The present application claims priority under 35 U.S.C. § 119(e) to U.S. Provisional Patent Application Serial No. 61/805,259, filed 26 March, 2013, the entire contents of which are expressly incorporated herein by reference.

**TECHNICAL FIELD**

The present embodiments relate generally to land and marine seismic exploration systems and methods and, more specifically, to systems and methods for interpolating seismic data using matching pursuit algorithms.

**BACKGROUND**

Seismic waves generated artificially have been used for more than 50 years to perform imaging of geological layers. During seismic exploration operations, vibrator equipment (also known as a "source") generates a seismic signal that propagates in the form of a wave that is reflected at interfaces of geological layers. These reflected waves are received by geophones, hydrophones or, more generally, receivers, which convert the displacement of the ground resulting from the propagation of the waves into an electrical signal which is recorded. Analysis of the arrival times and amplitudes of these waves make it possible to construct a representation of the geological layers on which the waves are reflected.

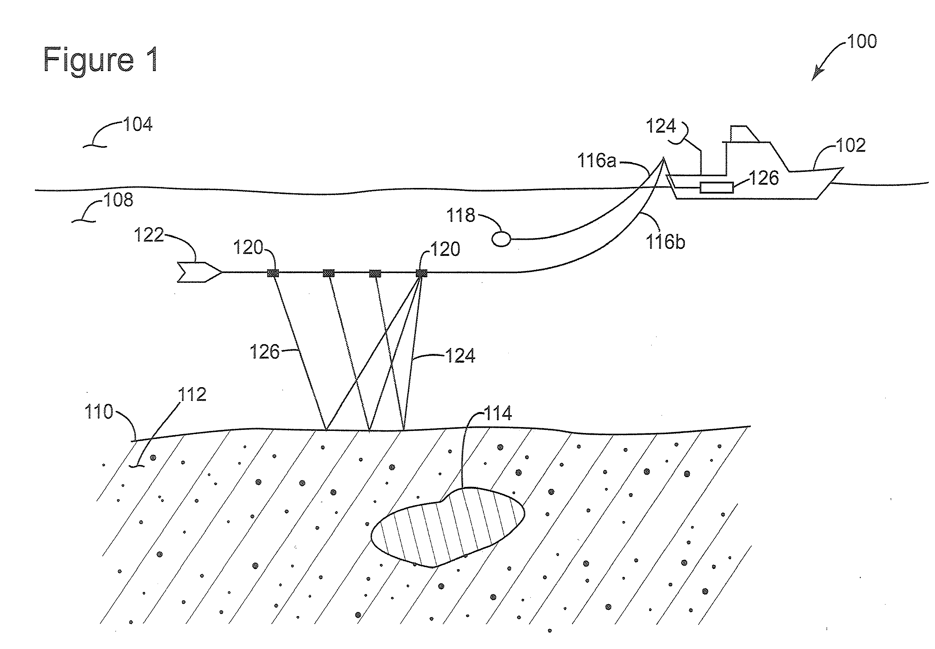

Figure 1 depicts schematically marine seismic exploration system (marine system) 100 for transmitting and receiving seismic waves intended for seismic exploration in a marine environment. Marine system 100 comprises a source 118 on a streamer or cable 116a, pulled from ship or boat 102, on the surface 106 of ocean 108 (or other water mass, such as a large lake or river). Source 118 is operable to generate a seismic signal. Marine system 100 further includes a set of receivers 120 (e.g., hydrophones) for receiving a seismic signal and converting it into an electrical signal, also located on streamer 116b, and marine seismic data recording/processing system 126 for recording and processing the electrical signals generated by receivers 120. Streamers 116 can also include birds 122 for guiding and maintaining position of streamers 116. Source 118, receivers 120 can be intermixed on one or more streamers 116, in any order. Figure 1 depicts source 118 as a single source but it should be understood that the source may be composed of several sources, as is well known to persons skilled in the art. Also part of system 100 are antennas 124 that can be used to transmit information and controls between ships 102, land bases, birds 122 (some birds 122 can also include antennas 122) and other devices.

In operation, source 118 is operated so as to generate a seismic signal. This signal propagates through water 108, in the form of transmitted waves 124 that generate reflected waves 126 when they reach an interface 110 between two layers 108 (ocean) and 112 (a geological layer, in this case, the ocean floor; it can also be appreciated by those of skill in the art that sometimes the transmitted waves 124 travel upwards instead of downwards, and when they reach the interface between atmosphere/air 104 and ocean 108 (i.e., at ocean surface 108) downward reflected waves 126 can also be generated (not shown); these are known by those of skill in the art as "ghosts"). Each receiver 120 receives one or more reflected waves 126 and converts them into an electrical signal. Marine system 100 intends to image the subsurface regions 112 to determine the presence, or not, of hydrocarbon deposit 114.

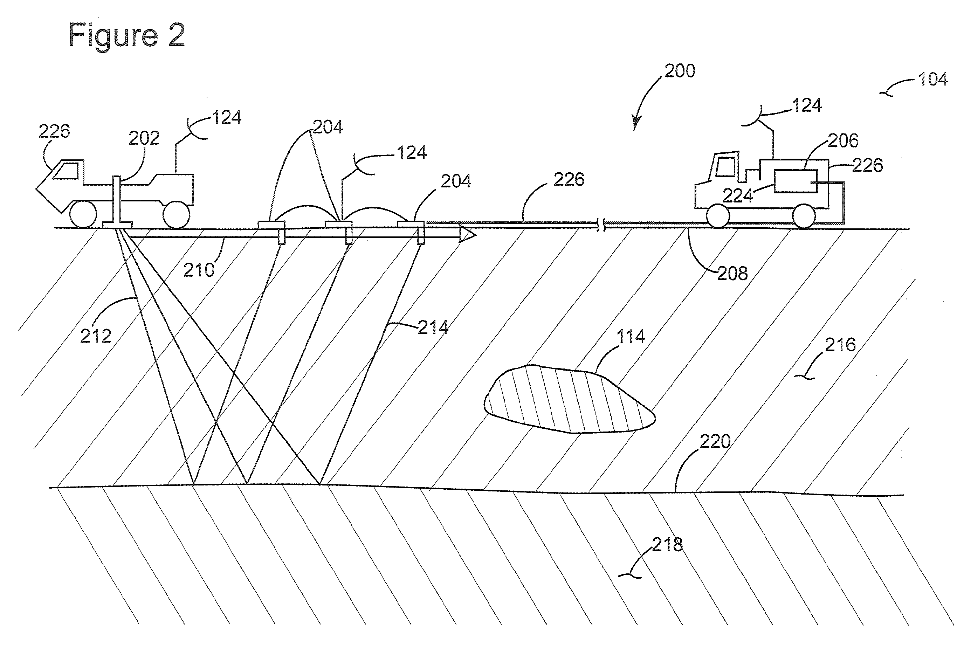

Figure 2 depicts a land seismic exploration system 200 for transmitting and receiving seismic waves intended for seismic exploration in a land environment. Land system 200 comprises a source 202 consisting of a vibrator operable to generate a seismic signal, a set of receivers 204 (e.g., geophones) for receiving a seismic signal and converting it into an electrical signal and land seismic data recording/processing system 226 for recording and processing the electrical signals generated by receivers 204. Land system 200 can further include antennas 124 for communications between vehicles 226, receivers 204, and land seismic data recording/processing system 226.

Source 202, receivers 204 and land seismic data recording/processing system 224 (located on vehicle 226) are positioned on the surface of ground 208. Figure 2 depicts source 202 as a single vibrator but it should be understood that the source may be composed of several vibrators, as is well known to persons skilled in the art. In operation, source 202 is operated so as to generate a seismic signal. This signal propagates firstly on the surface of the ground, in the form of surface waves 210, and secondly in the subsoil, in the form of transmitted waves 212 that generate reflected waves 214 when they reach an interface 220 between two geological layers. Each receiver 204 receives both surface wave 210 and reflected wave(s) 214 and converts them into an electrical signal, which signal thus includes a component associated with reflected wave 214 and another component associated with surface wave 210. Since land system 200 intends to image the subsurface regions 216 and 218, including hydrocarbon deposit 214, the component in the electrical signal associated with surface wave 210 is undesirable and should be filtered out.

It is known to those of skill in the art that seismic processing techniques often assume data are regularly sampled in space, but acquisition methods, particularly in marine environments, rarely achieve this in practice. Seismic data which exhibits, for example, large gaps or has irregular sampling, needs interpolation in order to fully benefit from further processing.

Seismic data interpolation methods can be roughly divided into those which are model-driven from the intrinsic wavefield physics, and those which are data-driven and exploit patterns in the data. In the former category, wave-equations use wavefield continuation methods to integrate new traces at nominated positions, but often require knowledge of the wavefield propagation velocity. In the latter category, signal processing based approaches assume that seismic traces contain locally coherent events, whose patterns allow energy to be projected from neighboring input traces to construct new traces. Examples of signal processing approaches include spatial Prediction Error Filter (PEF), which are designed from input traces and able to predict missing data traces (see, Spitz, S., 1991, "Seismic Trace Interpolation in the f-x Domain," Geophysics, 56, 785-794), and a whole class of algorithms that construct regularized seismic data from input data transformed into some intermediate domain. The transform is usually Fourier, but it can also be a Radon or a curvelet transform.

Recently, Fourier transform methods for seismic data interpolation have become popular because they are relatively easily extended to higher dimensions. As seismic data is generally well sampled in the time direction, such data can be transformed stably into the f-x domain. For each temporal frequency $f$, a 3D interpolation algorithm attempts to estimate the spatial Fourier spectrum (i.e. the f-$k_x$-$k_y$ domain). The increased data from additional dimensions (e.g. offset and azimuth) stabilizes the transform estimation (see, Trad, D., 2009, "Five-Dimensional Interpolation: Recovering From Acquisition Constraints," Geophysics, 74, V123-V132). However, this technique is subject to several constraints. For example, its inverse Fourier transform should exactly or approximately fit with available f-x data. Additionally, as described in "Seismic Trace Interpolation in the Fourier Transform Domain," Gulunay, N., Geophysics, 68, 355-369 (2003), the cyclic property of the discrete Fourier transform imposes a predefined shape on the spectrum.

Another example of Fourier transform based interpolation is the minimum weighted norm interpolation (MWNI) method (see, Liu, B., et al., 2004, "Minimum Weighted Norm Interpolation of Seismic Records," Geophysics, 69, 1560-1568), which minimizes an objective function that includes two terms: i) the difference between interpolated and observed data at input coordinates, and ii) a weighted spectral norm which constrains the shape of the reconstructed spectrum. Still another Fourier transform interpolator is the anti-leakage Fourier transform (ALFT) (see, Xu, S., et al., 2005, "Anti-leakage Fourier Transform for Seismic Data Regularization," Geophysics, 70, V87-V95). The Xu method is considered by those of skill in the art to be simple and intuitive: given input samples in the *f-x* domain, estimate their discrete Fourier transform in the *f-k* domain. The largest Fourier coefficient is selected and subtracted from the input data. In subsequent iterations, successive maximum components are subtracted until the norm of the residual is negligible. The motivation for the subtraction is to attenuate "frequency leakage" of the most energetic Fourier coefficient to other coefficients potentially attributable to irregularly sampled data. This iterative process is able to recover a sparse spectrum that, when evaluated at sampling points, approximates regularly sampled data. Several of these methods are discussed in greater detail below. However, there is a fundamental problem with each of the aforementioned processes: they rely on the common assumption that sparsely sampled data can be adequately represented by a few Fourier components.

This common assumption, however, is not universally true in the world of seismic data acquisition. As can be appreciated by those of skill in the art, seismic processing techniques often assume data are regularly sampled in space, but acquisition methods, particularly in marine environments, rarely achieve this in practice. Furthermore, aliasing problems can occur when reconstructing seismic data. If a seismic event is too deep, for example, in relation to other events ("event" or "events" meaning in this context reflection sources), then the high frequency values of the trace data become aliased, i.e., folded over or mixed up with lower frequency data.

Accordingly, for seismic data that exhibits large gaps and/or irregular sampling, it would be desirable to provide methods, modes and systems for interpolation that overcomes the problems in the conventional techniques described above.

<u>SUMMARY</u>

An aspect of the embodiments is to substantially solve at least one or more of the problems and/or disadvantages discussed above, and to provide at least one or more of the advantages described below. It is therefore a general aspect of the embodiments to provide an interpolation technique for seismic that will obviate or minimize problems of the type previously described.

According to a first aspect of the embodiments, a method for generating interpolated seismic data includes the steps of estimating a first frequency spectrum for seismic data using a matching point (MP) algorithm having a pre-computed term, estimating a second frequency spectrum of the seismic data, using the MP algorithm, an anti-aliasing mask and the estimated first frequency spectrum; and determining the interpolated seismic data by performing an inverse fast Fourier Transform on the second estimated frequency spectrum.

According to a second aspect of the embodiments, a system for generating interpolated seismic data includes at least one processor configured to estimate a first frequency spectrum for seismic data using a matching point (MP) algorithm having a pre-computed term, to estimate a second frequency spectrum of the seismic data, using the MP algorithm, an anti-aliasing mask and the estimated first frequency spectrum; and to determining the interpolated seismic data by performing an inverse fast Fourier Transform on the second estimated frequency spectrum.

According to a third aspect of the embodiments, a method for generating 5D interpolated seismic data using a fast matching pursuit (FMP) algorithm includes the steps of: obtaining a block *of Np* irregular trace data, and defining $N_k$ to be a desired number of regular trace data; estimating a conjugate of a Gram Matrix $G*$ with size $Np$ x $N_k$, using the $Np$ block of irregular traces; transforming the obtained irregular trace data from a *t-x* domain to an *f-x* domain; estimating a first set of frequency slices $f_1$ in an *f-k* domain of the transformed trace data using a fast MP algorithm that uses G*, wherein $f_1$ is for low frequency values only; estimating an anti-aliasing mask $M$ based on the first set of frequency slices $f_1$; estimating a second set of frequency slices $f_2$ using the fast MP algorithm using G* and the anti-aliasing mask M, wherein $f_2$ includes all frequencies up to and including a Nyquist frequency of the transformed trace data; and determining $N_k$ interpolated trace data by reverse transforming $f_2$ from the *f-k* domain to the *t-x* domain using an inverse 5D fast Fourier Transform.

## BRIEF DESCRIPTION OF THE DRAWINGS

The above and other aspects of the embodiments will become apparent and more readily appreciated from the following description of the embodiments with reference to the following figures, wherein like reference numerals refer to like parts throughout the various figures unless otherwise specified, and wherein:

Figure 1 illustrates a side view of a marine seismic exploration system for use in an underwater seismic gathering process;

Figure 2 illustrates a side view of a land seismic exploration system for use in a land seismic gathering process;

Figure 3 illustrates a general method for seismic exploration according to an embodiment;

Figure 4 illustrates the decay of the norm of the residual $R^m f$, of an anti-leakage Fourier transform algorithm and a fast matching pursuit algorithm according to an embodiment, plotted in logarithmic scale;

Figure 5 illustrates a comparison of the Fourier spectrums produced by an anti-leakage Fourier transform algorithm and a fast matching pursuit algorithm according to an embodiment, plotted in logarithmic scale;

Figures 6A - 6C illustrate examples of synthetic trace data interpolated using an embodiment of the fast matching pursuit algorithm;

Figures 7A and 7B illustrate examples of actual trace data interpolated using an embodiment of the fast matching pursuit algorithm;

Figure 8 illustrates a flow chart of a method for 5D anti-aliasing matching pursuit seismic data interpolation according to an embodiment;

Figure 9 illustrates a method for determining a set of regular frequency slices using a Gram Matrix, **G**\*, according to an embodiment;

Figure 10 illustrates a method for determining an anti-aliasing mask according to an embodiment;

Figure 11A illustrates a flow chart of a method for 5D anti-aliasing matching pursuit seismic data interpolation according to another embodiment; and

Figure 11B illustrates a flow chart of a generalized method for interpolating seismic data according to another embodiment;

Figures 12A - 12D illustrate examples of synthetic trace data interpolated using 5D anti-aliasing matching pursuit seismic data interpolation according to an embodiment;

Figures 13A and 13B illustrate examples of actual trace data interpolated using 5D anti-aliasing matching pursuit seismic data interpolation algorithm according to an embodiment;

Figures 14A and 14B illustrate stacks prior to, and after, use of the 5D anti-aliasing matching pursuit seismic data interpolation algorithm, respectively, according to an embodiment; and

Figure 15 illustrates a marine seismic data acquisition system suitable for use to implement a method for 5D anti-aliasing matching pursuit seismic data interpolation algorithm according to an embodiment;

## DETAILED DESCRIPTION

The embodiments are described more fully hereinafter with reference to the accompanying drawings, in which embodiments of the novel concept are shown. In the drawings, the size and relative sizes of layers and regions may be exaggerated for clarity. Like numbers refer to like elements throughout. The embodiments may, however, be embodied in many different forms and should not be construed as limited to the embodiments set forth herein. Rather, these embodiments are provided so that this disclosure will be complete, and will convey the scope of the concepts therein to those skilled in the art. It will be apparent to one skilled in the art, however, that at least some embodiments may be practiced without one or more of specific details described herein. In other instances, well-known components or methods are not described in details or are presented in simple block diagram format in order to avoid unnecessarily obscuring the embodiments. The scope of the embodiments is therefore defined by the appended claims. The following embodiments are discussed, for simplicity, with regard to the terminology and structure of a marine seismic exploration system. However, the embodiments to be discussed next are not limited to these systems but may be applied to other, e.g., land seismic exploration systems that are affected by problems of seismic data interpolation.

Reference throughout the specification to "one embodiment" or "an embodiment" means that a particular feature, structure, or characteristic described in connection with an embodiment is included in at least one embodiment of the embodiments. Thus, the appearance of the phrases "in one embodiment" on "in an embodiment" in various places throughout the specification is not necessarily referring to the same embodiment. Further, the particular feature, structures, or characteristics may be combined in any suitable manner in one or more embodiments.

According to the embodiments to be described below, matching pursuit seismic data interpolation algorithm methods overcome problems associated with the conventional techniques described in the Background section. For example, some of these interpolation embodiments make use of the Gram Matrix to reduce the computational complexity significantly over conventional interpolation methods. More specifically, and according to an embodiment, the number of computations can be reduced from Np x Nk operations to only Nk operations, wherein Np is the number of input traces, and Nk is the desired number of output traces. Additionally, some of the described embodiments include an anti-aliasing feature that further enhances the quality of the interpolated results and reduces (or eliminates) reliance upon the assumption that sparsely sampled data can be adequately represented by a few Fourier components.

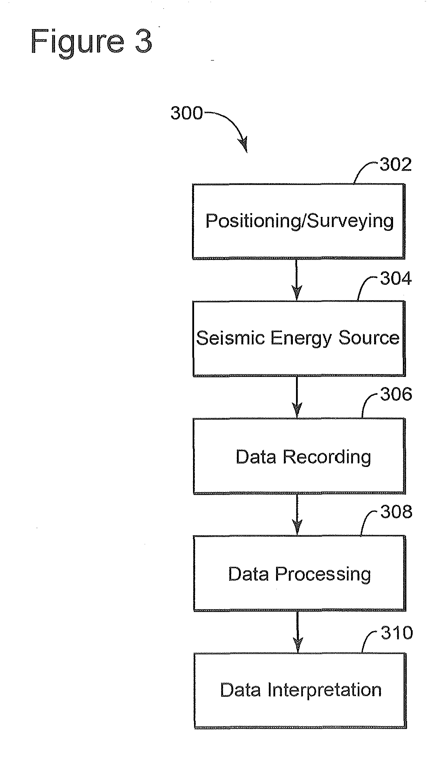

Prior to discussing these interpolation embodiments in more detail, it may be useful to consider the overall seismic exploration process in general for context. As generally discussed above, one purpose of seismic exploration is to render the most accurate graphical representation possible of specific portions of the Earth's subsurface geologic structure, e.g., using the seismic data which is collected as described above with respect to Figures 1 and 2. The images produced allow exploration companies to accurately and cost-effectively evaluate a promising target (prospect) for its oil and gas yielding potential (e.g., hydrocarbon deposits 114). Figure 3 illustrates a generalized method for seismic exploration that includes both the acquisition of the seismic data described above, and the subsequent processing of that seismic data to form such images. In Figure 3, the overall process 300 is broken down into five steps, although one could of course characterize seismic exploration in a number of different ways. Step 302 references the initial positioning of the survey equipment in the geographic area of interest (GAI) and the preparation to begin surveying the GAI in a manner which is precise and repeatable. Seismic waves are generated by the afore-described sources or vibrators (step 304), and data recording is performed on the reflected, scattered and surface waves by the receivers (step 306).

In step 308, processing of the raw, recorded seismic data occurs. Data processing generally involves numerous processes intended to, for example, remove noise and unwanted reflections from the recorded data, and involves a significant amount of computer processing resources, including the storage of vast amounts of data, and multiple processors or computers running in parallel. In particular, for the embodiments discussed below, such processing includes interpolation to "fill-in" missing and/or incomplete and/or noisy recorded data. Such data processing can be performed on site, back at a data processing center, or some combination thereof. Finally, in step 310, data interpretation occurs and the results can be displayed or generated as printed images, sometimes in two-dimensional form, more often now in three dimensional form. Four dimensional data presentations (i.e., a sequence of 3D plots or graphs over time) are also possible outputs, when needed to track the effects of, for example, extraction of hydrocarbons from a previously surveyed deposit.

With this context in mind, and as briefly discussed above, there are numerous methods available for performing seismic data interpolation to fill in gaps within an acquired seismic data set. One such method can be generally referred to as matching pursuit. Described below is a new, fast matching pursuit (FMP) algorithm according to an embodiment, followed by a comparison between the FMP algorithm with a conventional, anti-leakage Fourier Transform (ALFP) method which is also used to perform seismic data interpolation.

To illustrate a method of regularization of non-uniform sampled functions by matching pursuit, interpolation problems associated with a single frequency slice of 2D seismic data are first considered. Throughout this discussion, bold letters imply column vectors and bold capital letters represent two-dimensional arrays. A continuous complex-valued function $f(x)$ can be defined in the range from 0 to 1 and sampled at a set of $Np$ points, as follows:

$$\mathrm{x}\ell\,,\,0 \leq \mathrm{x}\ell < 1,\, 1 \leq \ell \leq N_p\,.$$

Any continuous function $f(x)$ can be decomposed into an infinite sum of complex exponentials that are periodic in the range [0, 1]. It can be assumed that the function is band-limited and can be expressed as a sum of $N_k$ frequency components from $-N_k/2$ to $+N_k/2 - 1$. These complex exponentials can be evaluated exactly by the integral Fourier series formula only if $f(x)$ is known for all $x$. The values $f(k)$, $-N_k/2 \leq k < N_k/2$ are called Fourier coefficients of $f(x)$. If it is desired to find $\hat{f}(k)$ so that the sum of the $N_k$ complex exponential functions at $x_\ell$ are equal to $f(x_\ell)$, this can be accomplished by computing:

$$f(x_l) = \sum_{k=-N_k/2}^{\frac{N_k}{2}-1} \hat{f}(k)e^{2\pi i k x_l} \quad (1).$$

Equation (1) expresses the $Np$ values of $f(x_\ell)$ as the sum of $N_k$ Fourier functions $e^{2\pi k x_l}$. In vector notation, samples $f(x_\ell)$ can be written as a column vector $f$ of length $Np$; the $N_k$ frequency components are written as column vector $\hat{f}$. The exponential wave function $\varphi_k$ evaluated at $x_l$, is denoted by $k$, with elements:

$$\frac{1}{\sqrt{N_p}}\, e^{2\pi i k x_l},$$

wherein the term:

$$\frac{1}{\sqrt{N_p}}$$

normalizes the vector $\varphi_k$ to have a norm of 1. The matrix $\varphi$ of size $Np \times N_k$ is created by $N_k$ column vectors $\varphi_k$. Equation (1) can be expressed in matrix form as: -

$$f = \sqrt{N_p}\,\mathbf{\Phi}\hat{f} \quad (2).$$

Equation (2) is an undetermined system of equations when $N_k > Np$. The use of the Fourier method in seismic interpolation assumes that the spectrum is sparse, which means there are relatively few dominant wavenumbers, most of the spectral values being near zero.

One way to find a sparse solution to an undetermined system of equations is by using the matching pursuit (MP) algorithm. Those of skill in the art will appreciate that MP is a so called 'greedy algorithm' that optimizes the approximation of $f$ by selecting one vector $\varphi_k$ at each iterative step. Effectively, the MP algorithm searches for the index $p_0$ of the set of $\varphi_k$ that best correlates with $f$, as:

$$|(f, \boldsymbol{\varphi}_{p_0})| \geq |(f, \boldsymbol{\varphi}_k)|, \ -N_k/2 \leq k < N_k/2 \ (3).$$

The number of wave vectors $N_k$ is determined by the required output grid for interpolated data output. The vector $f$ can be written as the sum of its orthogonal projections onto the vector $\varphi_k$ and the residual $R^1f$:

$$R^1\boldsymbol{f} = \boldsymbol{f} - (\boldsymbol{f}, \boldsymbol{\varphi}_{p_0})\boldsymbol{\varphi}_{p_0} \quad (4).$$

The MP algorithm continues by selecting another vector $\varphi_{p_1}$ that best estimates the residual vector $R^1\boldsymbol{f}$. MP attempts to find a sparse approximate solution $\hat{f}$ to Equation (2) using the method discussed below. The sparse approximate solution $\hat{f}$ is obtained when the residual vector $R^1\boldsymbol{f}$ is estimated to be less than the threshold $\varepsilon$, as discussed below. The threshold value $\varepsilon$ is normally calculated from the seismic data and a user parameter. According to one embodiment, at the start of the process, the program reads the user parameter, for example 0.001, and then multiplies it with the average of the absolute value of a random set of 100 input seismic traces. This value is used as epsilon. If the user chooses a low threshold (e.g., less than 0.001), then the program will take a longer time to run, and vice versa.
The MP method for finding a sparse approximate solution $\hat{f}$ to Equation (2) begins with choosing a threshold $\varepsilon$, setting $m = 0$, $\hat{f} = 0$, $R^m\boldsymbol{f} = \boldsymbol{f}$ (step 1). The MP algorithm then finds (step 2) the index $p_m$ of the vector $\varphi_{\boldsymbol{p_m}}$ that best correlates with the residual $R^m\boldsymbol{f}$ by estimating:

$$\tilde{\boldsymbol{f}}^{\boldsymbol{m}} = \ \boldsymbol{\Phi}^*R^m\boldsymbol{f} \quad (5),$$

where $\tilde{\boldsymbol{f}}^{\boldsymbol{m}}$ is a vector of size $N_k$, and its $p_m$ element is:

$$\tilde{f}(p_m) = \ \langle R^m f, \phi_{p_m} \rangle \ (5A).$$

In a third step the MP algorithm then increments $\tilde{f}^m(p_m)$ by $\dfrac{1}{\sqrt{N_p}} \tilde{f}^m(p_m)$ ..

The MP algorithm then subtracts (in step 4) from the existing residual value $R^m$ the new incremented value of $\tilde{f}^m(p_m)$:

$$R^{m+1}\boldsymbol{f} = \ R^m\boldsymbol{f} - \ \tilde{\boldsymbol{f}}^m(p_m)\boldsymbol{\varphi}_{p_m} \quad (5B),$$

and determines the norm of the new residual $R^{m+1}f$. In the final step of the MP algorithm, the MP algorithm determines whether the norm of the residual $R^{m+1}f$ is less than $\varepsilon$, the predetermined threshold, and if so, the MP algorithm has determined the index $p_0$ of the set of $\varphi_k$ that best correlates with $\boldsymbol{f}$, as described above. If, however, the norm of the residual $R^{m+1}\boldsymbol{f}$ is equal to or greater than the predetermined threshold $\varepsilon$, the MP algorithm increments $m$ by one, and returns to the step of obtaining the index $p_m$ of the vector $\varphi_{p_m}$.

Those of skill in the art will further appreciate that the most expensive phase in the MP algorithm, in terms of processing bandwidth, is the step where matrix multiplication is required. Such matrix multiplication results in a complexity of each iteration on the order of $N_p \times N_k$. According to an embodiment, however, if the equation in step 4 is multiplied by $\Phi^*$ and using of Equation (5), then it can be determined that:

$$\tilde{f}^{m+1} = \tilde{f}^m - \tilde{f}^m(p_m)\Phi^*\phi_{p_m} \quad (6).$$

If the vector $\Phi^*\phi_{p_m}$ is pre-computed, then $\tilde{f}^{m+1}$ can be estimated from $\tilde{f}^m$ in only $N_k$ operations. As those of skill in the art can appreciate this modification to the matching pursuit algorithm can save a significant amount of processing operations per iteration. As such, the matching pursuit algorithm which is modified as described above with respect to Equation (6) can now be referred to as the fast matching pursuit (FMP) algorithm and represents one aspect of an interpolation technique for seismic data according to these embodiments.

Pre-computation of the vector $\Phi^*\phi_{p_m}$ can be performed, according to an embodiment, by pre-computing the so-called Gram matrix. By definition, the Gram matrix G of the set of $N_k$ vectors $\varphi_k$ is an $N_k$ by $N_k$ matrix whose elements $g_{i,j} = (\varphi_i, \varphi_j)$. It can be observed by those of skill in the art that the vector $\Phi^*\phi_{p_m}$ is the $p_m$ column of the conjugate of the Gram matrix, $G^*$, which can be determined as shown in Equation 6(A):

$$G^* = \Phi^*\Phi \quad (6A).$$

In the context of seismic interpolation processing, the cost of estimating and storing $G^*$ is essentially negligible because $G^*$ is a Hermitian Toeplitz matrix with diagonal elements equal to 1. Therefore, only the $N_k$ elements of the first row or column need to be computed. More importantly, as Fourier seismic interpolation is run in the $f$-x domain, the set of basis function $\varphi_k$ stays the same for each $f$, thus the pre-computed matrix $G^*$ can be used for all frequencies $f$.

In order to better understand the improvement provided by FMP techniques according to these embodiments, relative to conventional interpolation techniques, a comparison will be provided with respect to the conventional anti-leakage Fourier transform (ALFT). Numerical testing of the FMP and the ALFT algorithms was performed using a function having two different frequencies:

$$f(x_l) = 5\sin(25.6\,x_l) + 2.5\sin(128\,x_l + 1) \quad (7).$$

As those of skill in the art can appreciate, the is the same test function used by Xu et al., as discussed in his article published in 2005, "Anti-Leakage Fourier Transform for Seismic Data Regularization," Geophysics, 70, V87-V95, which the interested reader may also consult to obtain details regarding the ALFT, generally. The function in equation (7) was sampled randomly at $Np$ = 64 points in the range [0,1] and the two algorithms (FMP and ALTF) were used to recover $N_k$ = 128 frequencies.

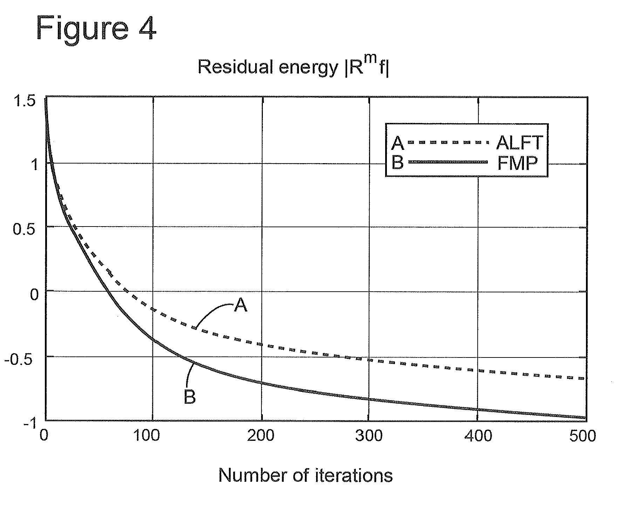

Using the results of this numerical testing, Figure 4 illustrates the decay of the norm of the residual $R^m f$, plotted in log scale, for each of the FMP and ALFT algorithms. Therein, Line A illustrates the decay in residual value for the ALFT algorithm, and line B illustrates the decay in residual value for the FMP algorithm according to an embodiment. In order to reduce the effect of randomness of the sampling points, the plotted decay rates in Figure 4 represent averaged results after 1000 runs. As can be seen in Figure 4, the FMP algorithm has a much faster decay rate compared to the ALFT. In general, the ALFT needs to run twice the number of iterations compared to the FMP algorithm with the same stopping criterion. According to an embodiment, the FMP algorithm looks for the best basis function to project the residual onto. Therefore, the norm of the residual function is reduced by the maximum possible amount at each iteration. For the ALFT algorithm, there is no guarantee that the norm of the residual will decrease, and experiments have shown that the norm of the residual can actually increase over a number of iterations when the input data contains noise. Since almost all real world data has noise, this clearly demonstrates an inherent deficiency in the ALFT algorithm.

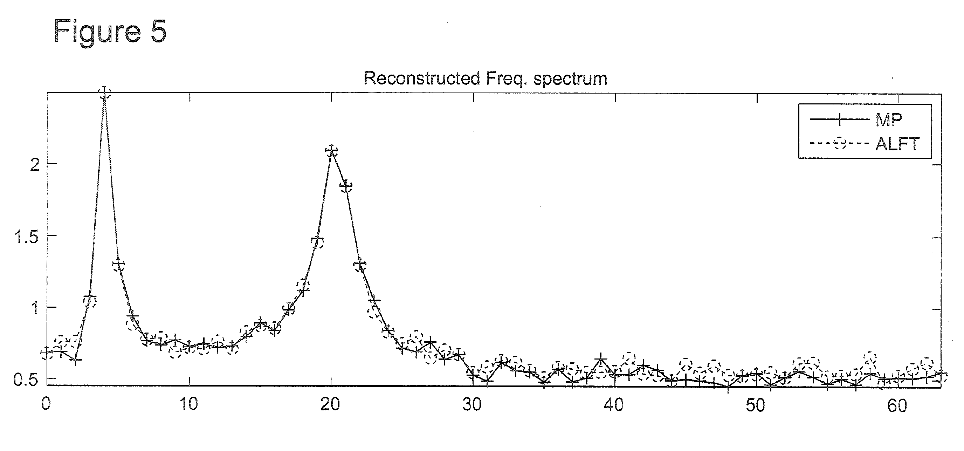

It is known that the ALFT algorithm has a good approximation of the spectrum at each iteration step, and therefore those of skill in the art could assert that it might be able to produce a better overall spectrum than the FMP algorithm. However, numerical experiments using both the FMP and ALFT algorithms clearly show that the spectra produced by the two algorithms are nearly identical, as Figure 5 illustrates. Therefore, those of skill in the art can appreciate that the FMP algorithm is advantageous in that it requires less processing than the ALFT to produce similar spectra.

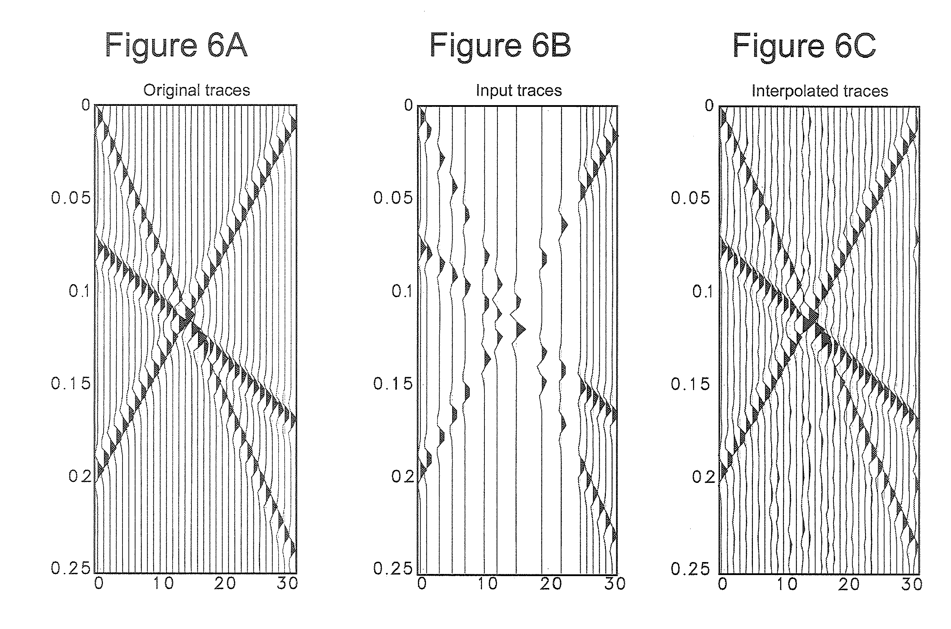

To illustrate the application of FMP embodiments to the interpolation of seismic data, Figures 6A - 6C depict examples of synthetic seismic trace data interpolated using the FMP algorithm according to an embodiment. The synthetic data consists of a set of 32 traces containing three linear events. Sixteen traces are randomly removed and the MP algorithm is used to reconstruct the whole data set. Figure 6A is the original set of 32 traces; Figure 6B is the same set of synthetic data with sixteen (50%) randomly removed traces, and Figure 6C is the result of applying the FMP algorithm according to an embodiment on the synthetic data set of Figure 6B with half of the trances randomly removed.

A comparison between Figures 6A (the original data) and Figure 6C (the interpolated data) shows the results of the MP algorithm as being very good at reconstructing the original data set of traces. Those of skill in the art can appreciate that a small amount of coherent noise is present, which becomes even more evident if more input traces are discarded. This occurs when the spectrum of the original data in the *f-k* domain cannot be reconstructed perfectly; any error will be expressed as a coherent wave in the *t-x* domain. This is a specific problem with Fourier methods, demonstrated clearly here on synthetic data. Other problems are the wrap-around effects noticed on the quiet trace on the extreme right hand side. This can be ameliorated by tapering, which is a process known to those of skill in the art.

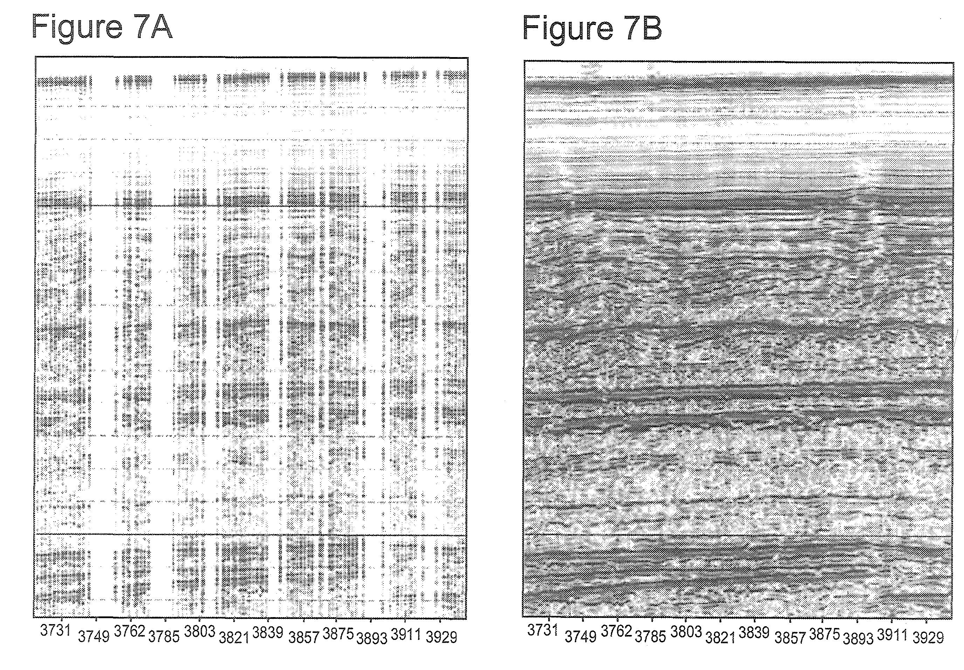

Figures 7A and 7B illustrate an example of actual trace data interpolated using the FMP algorithm according to an embodiment. More specifically, Figures 7A and 7B represent the application of a 3D FMP interpolation algorithm according to an embodiment to a real marine dataset in midpoint coordinate space. The nominal inline sampling is 12.5 m, but with only a 25 m crossline. Figure 7A illustrates one crossline section, and the maximum gaps are 10 to 15 traces wide and are typically present in all crosslines. The interpolation results of Figure 7B are fairly good, with potential diffraction, un-conforming events, and the amplitude spectrum is well preserved in the interpolated traces. As those of skill in the art can appreciate, it is difficult to visually determine which traces are interpolated and which traces are input data. Those of skill in the art can appreciate that large gaps are convincingly interpolated.

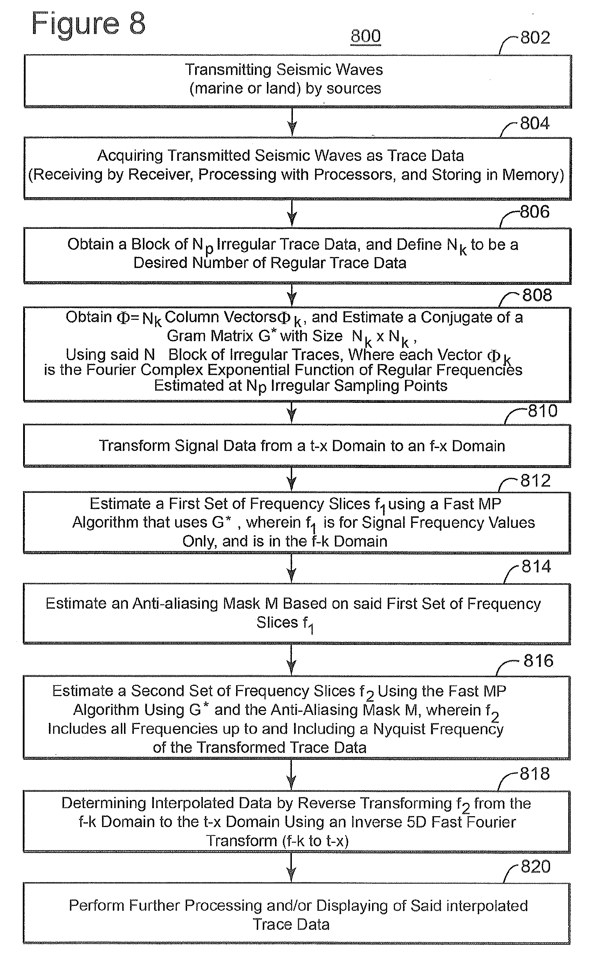

Attention is now directed towards another matching pursuit algorithm for interpolation of seismic data according to an embodiment. Figure 8 illustrates a flow chart of method 800 for 5D anti-aliasing matching pursuit seismic data interpolation according to an embodiment. Prior to discussing method 800 for 5D anti-aliasing matching pursuit seismic data interpolation in detail, a brief discussion of 5D data and interpolation, in general, will be provided.

It will be appreciated by those skilled in the art that seismic data acquisition produces 5 dimensional (5D) data, in which one dimension is time, and the rest of the dimensions are the coordinates of the source and receiver on the surface. Whenever the input data is 5D, such as 3D land or wide-azimuth marine surveys, a 5D interpolation method is preferable as it will use all available data to reconstruct traces in regular source and receiver coordinates. It is further known that many interpolation methods are transform-based, meaning that the interpolated data is generated by inverse transformation. In the attempt to reconstruct missing data, the main expenditure of processing time/effort is in the construction of the transformed representation that best reconstructs the input data based on in inverse transformation.

Attention is now directed towards Figure 8, and method 800 for 5D anti-aliasing MP seismic data interpolation according to an embodiment, which begins with step 802, wherein seismic waves (marine or land) are transmitted by sources 118, 202. In step 804, reflected waves, some primary and some as a result of multiples, and in the case of land seismic exploration, ground waves, are acquired by receivers 120, 204, processed, and stored in system 126 (marine)/226' (land), both of which are described in greater detail below.

In method step 806, method 800 obtains a block *of Np* irregular trace data from the acquired trace data, and defines $N_k$ to be a desired number of regular trace data. That is, $N_k$ is the desired output of regular trace data of method 800. In method step 808, method 800 uses the irregular $N_p$ coordinates to first estimate $\Phi$, the matrix *of Np* x $N_k$, created by $N_k$ column vectors $\varphi_k$, the rows indexed by $x_l$ having no particular order according to an embodiment, while the columns indexed by four dimensional wavenumber $k$ follow lexicographical order. The column vectors $\varphi_k$ can also be defined as the exponential wave function $k$, evaluated at $x_l$, wherein $x_l$ is a sampled point value of the trace data. Then, method 800 can estimate a conjugate of a Gram Matrix **G\***, which has a size $N_k$ x $N_k$, using said *Np* block of irregular traces.

Next, in method step 810, method 800 transforms the *Np* irregular trace data from a *t-x* domain to an *f-x* domain. In step 812, method 800 then estimates a first set of regular frequency slices $f_1$ using the fast MP algorithm discussed above according to an embodiment, which uses G\* and further wherein the first set of regular frequency slices $f_1$ is for signal frequency values only, i.e., the frequency of the transmitted seismic signals. The final output from step 812 of method 800 puts the data into the *f-k* domain. According to an embodiment, signal frequencies can be in the range of about 10 Hz to about 70 Hz, though those of skill in the art can appreciate that these frequencies should not be construed in a limiting sense, in that different frequency values can be used and still considered within aspects of the embodiments.

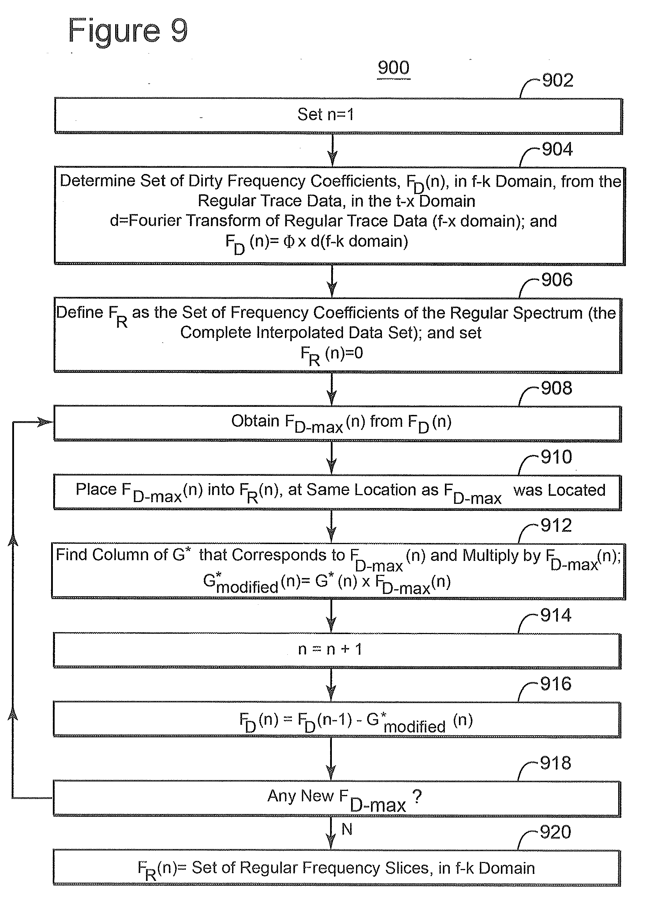

To better understand the complex processing which is being performed in step 812, Figure 9 illustrates method 900 for determining a set of regular frequency slices using a Gram Matrix, **G\*** according to an embodiment. According to this embodiment, **G\*** is used to calculate the first (regular) frequency slices in the following iterative manner. A "dirty" spectrum is first determined or estimated from the irregular trace data (steps 902-904). In this context, a dirty spectrum is the spectral frequency range of the irregular trace data, and can be denoted as $F_d$. According to an embodiment, $F_d$ is determined using any of well-known Fourier transform methods to determine the frequency coefficients. The $F_d$ coefficients are obtained in the f-x domain, while the original trace data is in the t-x domain. Following transformation using a Fourier transform, method 900 takes the frequency data, *d*, of each frequency slice *f*, and multiplies it by $\Phi$, determined in step 808 of method 800, to obtain $F_D(n)$ in the f-k domain, according to the following relationship:

$$F_D(n) = \boldsymbol{\Phi} \times d. \quad (8)$$

Then, using an iterative approach, a regular spectrum, $F_r$, is determined (steps 908-920). The regular spectrum is the spectrum or spectral frequency range of the desired complete interpolated set of trace data. The regular spectrum value is initially set to 0: $F_r = 0$; and a maximum coefficient value of the dirty spectrum is obtained, $F_{d\text{-}max}$, this, of course, indicates some spectral frequency of the dirty spectrum. $F_{D\text{-}max}(n)$ is placed in $F_R(n)$ at the same location as $F_{D\text{-}max}$ was located (step 910). The column of $\mathbf{G^*}$ that corresponds to $F_{d\text{-}max}$ is then multiplied by $F_{d\text{-}max}$ (which can then be denoted as $\boldsymbol{G^*_{max}}$), and subtracted from $F_d$ (step 912). This produces a new set of dirty spectrum (as well as incrementally and iteratively building up the regular spectrum $\mathbf{G^*}$), and the process continues by iteratively taking the largest remaining coefficient value $F_{d\text{-}max}$ until none are left, producing the complete $\mathbf{G^*}$.

According to an embodiment, the use of different columns of $\mathbf{G^*}$, as found in step 912 of method 900 includes the use of the FMP algorithm described above. According to a further embodiment, however, the complete MP algorithm can be used instead, albeit many more computations would be required without obtaining significantly better results. As those of skill in the art can appreciate, however, this illustrates that various other means exist for implementing method 900 for determining a set of regular frequency slices using $\mathbf{G^*}$ and such other means are considered to be included as different aspects of the embodiments described herein.

Returning again to Figure 8, and method 800, in step 814, method 800 uses the first set of regular frequency slices $\boldsymbol{f_1}$, determined in method step 812, to estimate an anti-aliasing mask M (AA Mask). According to an embodiment the AA Mask M can be determined as follows. Generally, the AA Mask M is determined using an iterative approach wherein at each iteration the amplitude of the residual spectrum is multiplied with the previously determined (or known) AA Mask M, and the position of the maximum element in the result is determined. The coefficient of the residual spectrum at this position is selected, and the corresponding component of the wavenumber is subtracted from the residual spectrum.

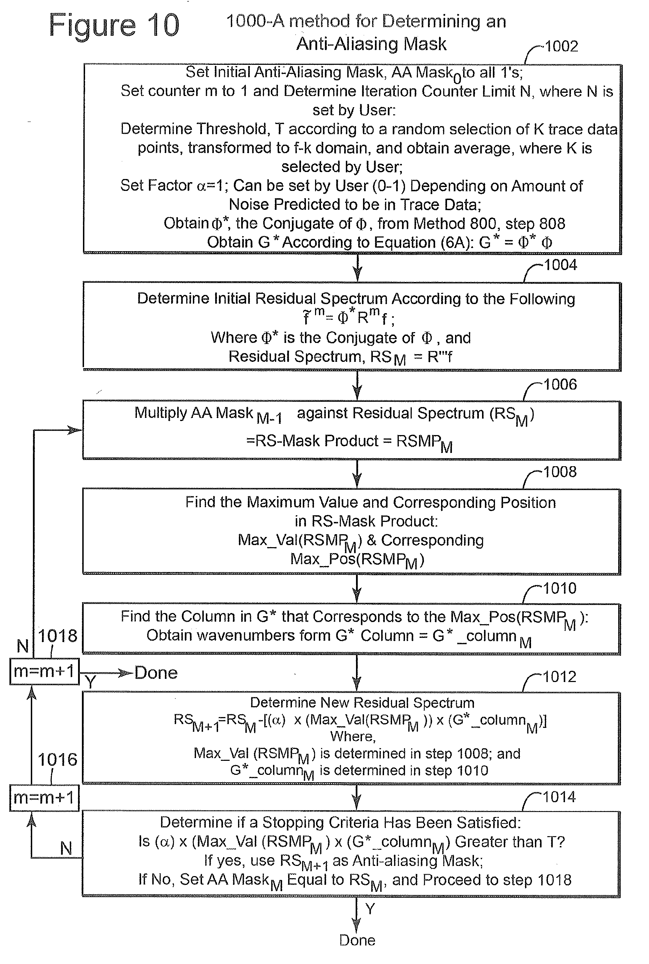

More detail regarding this technique for estimating an AA mask is provided in Figure 10. Therein, method 1000 begins with step 1002 wherein, for the first iteration, an initial AA Mask, $AA\ Mask_0$ is set equal to all 1's, to initialize it. Further in step 1002, method 1000 sets counter m to 1, and determines an iteration counter limit $N$, where N is set by a user based on prior experience and/or empirical data, as is known to those of skill in the art. Further in step 1002, method 1000 determines threshold, $T$, according to a random selection of $K$ trace data point. Once the K trace data points are selected, method 1000 transforms them to the f-k domain, and obtains their average, which becomes the threshold, $T$. $K$ is a number selected by the user, again based on prior experience and/or empirical data. The threshold $T$ is used to determine, in one embodiment, a stopping point for the iterative determination of the AA Mask; another stopping point is the number of iterative determinations performed, i.e., the number of loops. According to another embodiment, the iterative counter limit N determines the number of iterations (or calculations of the AA Mask) that should be performed, to determine the AA Mask.

Further in step 1002, method 1000 sets the factor $\alpha = 1$. According to an embodiment, the factor $\alpha$ can be set by the user to be a number to be between 0 and 1, depending on the amount of noise predicted to be in the trace data. Method 1000 then proceeds, still while in step 1002, to obtain $\boldsymbol{\Phi^*}$, the conjugate of $\boldsymbol{\Phi}$, determined in method 800, step 808, and then to use that result to determine the Gram matrix conjugate $\mathbf{G^*}$ according to Equation (6A), i.e., $\boldsymbol{G^*} = \boldsymbol{\Phi^*}\boldsymbol{\Phi}$.

Method 1000 then proceeds to method step 1004, wherein an initial residual spectrum is determined according to Equation (5), i.e.:

$$\tilde{\boldsymbol{f}}^m = \boldsymbol{\Phi}^* R^m \boldsymbol{f};$$

where $\boldsymbol{\Phi^*}$ is the conjugate of $\boldsymbol{\Phi}$, and the residual spectrum, $RS_M = R^m\boldsymbol{f}$. In step 1006, method 1000 then multiplies the previously determined $AA\ Mask_{M\text{-}1}$, in the initial case, $AA\ Mask_0$, against the residual spectrum, to determine the residual spectrum mask product, RS-Mask Product, $RSMP_M$.

Then, in step 1008, method 1000 finds the maximum value and corresponding position in the RS-Mask Product, Max_Val($RSMP_M$) and Max_Pos($RSMP_M$), respectively. In step 1010, method 1000 uses the Max_Pos($RSMP_M$) as determined in step 1008 to find its corresponding column in G*; method 1000 then obtains the wavenumbers from that column, which are represented as G*_column$_M$. In step 1012, a new residual spectrum, $RS_{M+1}$ is calculated according to the following expression:

$$RS_{M+1} = RS_M - [(\alpha) \text{ x } (\text{Max\_Val}(RSMP_M)) \text{ x } (\text{G*\_column}_M)];$$

where, Max_Val($RSMP_M$) was determined in step 1008, and G*_column$_M$ was determined in step 1010. As discussed above, the factor $\alpha$, while typically set to 1, could be different, for example, a value between 0 to 1 dependent upon the amount of noise in the trace data, as previously discussed.

Then, method 1000 proceeds to decision step 1014 wherein a determination is made as to whether stopping criteria has been encountered. That is, method 1000 determines whether the subtrahend of [($\alpha$) x (Max_Val($RSMP_M$)) x (G*_column$_M$)] is greater than the threshold, T. If [($\alpha$) x (Max_Val($RSMP_M$)) x (G*_column$_M$)] is greater than T ("Yes" path from decision step 1014), method 1000 is complete, and the last determined residual spectrum is the anti-aliasing mask for use in the balance of steps remaining in method 800. If, however, [($\alpha$) x (Max_Val($RSMP_M$)) x (G*_column$_M$)] is not greater than T ("No" path from decision step 1014), method 1000 first sets AA Mask$_M$ equal to $RS_M$, and then proceeds to step 1016, wherein the counter m is incremented by 1, and then checked, in step 1018 as to whether iteration counter limit, N, has been met.

That is, if m equals N, then the iterative loop of method 1000 has been determined to have occurred enough times, and the last determined residual spectrum is used as the anti-aliasing mask ("Yes" path from decision step 1018). The iteration counter limit N is determined by a user as discussed above. If, however, m < N ("Yes" path from decision step 1018), then method 1000 proceeds to step 1006, and using the just determined new residual spectrum, and previous AA Mask$_{M-1}$, determines a new AA Mask$_M$. The output of method 1000, therefore, is the anti-aliasing mask M used in step 816 of method 800.

While Figure 10 represents one way to determine an AA Mask according to an embodiment, it will be appreciated that the method of Figure 8 is not limited thereto, and that other embodiments of Figure 8 may employ known techniques for determining an anti-aliasing mask.

Returning to Figure 8, method 800 now uses the whole range of frequencies f, in step 816, to estimate a second set of frequency slices $f_2$ using the same fast MP algorithm as used in step 812, using $G*$ as determined in method step 808 and the anti-aliasing mask M determined in method step 814, wherein $f_2$ includes all frequencies up to and including a Nyquist frequency of the transformed trace data. According to an embodiment, the anti-aliasing mask M is used to weight the residual in order to preferentially selected the most energetic k coefficient as observed from method step 810, according to the MP algorithm as discussed by Nguyen, T., et al., in an article entitled "Seismic Interpolation by Optimally Matched Fourier Component," 2011, SEG International Exposition and 81th Annual Meeting, 3085-3089. According to an embodiment, the most energetic k coefficient is the coefficient with the greatest amplitude following weighting. The second set of regular frequency slices $f_2$ is the basis for the interpolated data. In this context, the second set of frequency slices f2 refers to all of the frequency slices needed to reconstruct interpolated traces. For example if the traces are sampled at 4ms, the Nyquist frequency is 125 Hz and the second set of frequency slices f2 include frequency slices from 0 to 125 Hz.

According to an embodiment, the final AA Mask M determined in method step 814 is used to estimate the second set of frequencies, the regular frequency slices, $f_2$. AA Mask M is used to weight the residual (or dirty spectrum) by multiplication. That is, AA Mask M is multiplied against the value of the residual, which, according to an embodiment, are complex numbers. Then, the coefficient at the position where the weighted value is maximized is selected. As will be appreciated by those skilled in the art, the term 'frequency slice' refers to the whole spectrum that the MP algorithm is trying to reconstruct. For example, suppose that a 2D MP algorithm is trying to reconstruct 32 seismic traces of length 100 samples in the t-x domain. The MP algorithm does that by reconstructing an f-k representation of 100 'frequency slices' f, each frequency slice consisting of 32 frequency k. So the MP algorithm will be running 100 times with the antialiasing mask for each frequency slice. Accordingly, to estimate the second set of frequencies, the present embodiment multiplies the antialiasing mask with the current residual frequency, and finds the position that has maximum value for a specific frequency k. This can be accomplished by, for example, calculating, for a selected frequency index n, the equation:

$$n = argmax\_n \left( Mask* absolute\_value(Phi*R^{\wedge}mf) \right)$$

In method step 818, method 800 determines the interpolated data by reverse transforming $f_2$ from the f-k domain to the t-x domain using an inverse 5D Fast Fourier Transform (FFT), the inverse 5D FFT being known to those of skill in the art. In optional step 820, method 800 performs further processing and/or displaying of interpolated data.

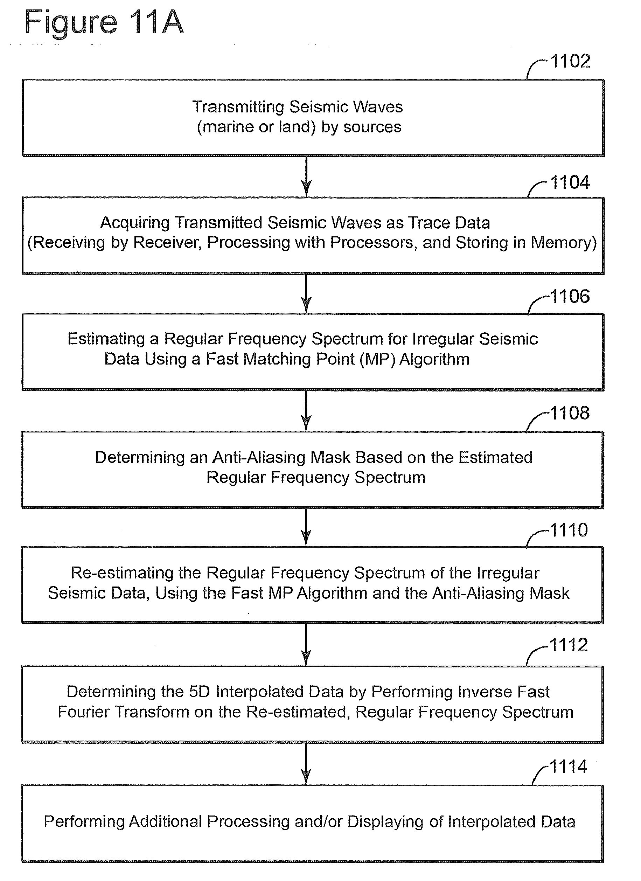

According to a further embodiment, method 800 can be implemented as method 1100, shown in Figure 11A, which also accomplishes data interpolation. Method 1100 for 5D anti-aliasing matching pursuit seismic data interpolation begins with step 1102, wherein seismic waves (marine or land) are transmitted by sources 118 or 202. In step 1104, reflected waves, some primary and some as a result of multiples, and in the case of land seismic exploration, ground waves, are acquired by receivers 120 or 204, processed, and stored in system 100 (marine)/200 (land), both of which are described in greater detail below.

Next, in step 1106, an estimation is made of a regular frequency spectrum for irregular seismic data using the FMP algorithm. Then, in method step 1108, method 1100 determines an anti-aliasing mask $M$ based on the estimated regular frequency spectrum as determined in method step 1106. In method step 1110, method 1100 re-estimates the regular frequency spectrum of the irregular seismic data, using the fast MP algorithm and the anti-aliasing mask M. In method step 1112, method 1100 determines the 5D interpolated data by performing inverse fast Fourier Transform on the re-estimated, regular frequency spectrum. Further processing and/or displaying of interpolated data can then occur in step 1114.

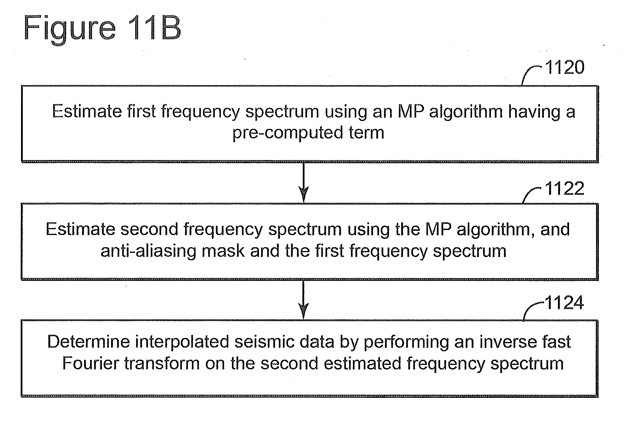

Various alternatives are also contemplated by the embodiments. For example, the estimation of the anti-aliasing mask and the actual MP interpolation described above can be performed independently of one another. For example, the MP interpolation described above can be used with a different anti-aliasing mask, or with a dip mask estimation method. A more generalized embodiment is illustrated in the flow diagram of Figure 11B. Therein, at step 1120, a first frequency spectrum for seismic data is estimated using a matching point (MP) algorithm having a pre-computed term (e.g., the conjugate of the Gram matrix). A second frequency spectrum of the seismic data is then estimated, using the MP algorithm, an anti-aliasing mask and the estimated first regular frequency spectrum at step 1122. Then, interpolated seismic data is determined at step 1124 by performing an inverse fast Fourier Transform on the second estimated frequency spectrum.

Both of methods 800 and 1100 included discussion of additional post processing steps that should be familiar those of skill in the art. However, as is known to those of skill in the art, there are also pre-processing steps that can be important, and are generally considered to be included in the embodiments discussed herein, and especially with respect to method steps 804, 1104. Interpolation results are known to be sensitive to the quality of input data, so traces used in interpolation should be free from dead or bad traces. The presence of a single dead or bad trace can, under some circumstances, hamper interpolation of all traces generated within that processing window. The distribution of available traces within an interpolation block is also important in the quality of the result. Methods 800 and 1100 according to an embodiment produce good results with input/output traces ratio of about 1/2 in a 2D case, or about 1/16 in a 5D case, although these embodiments are not limited thereto. According to a further embodiment, distribution of the input traces should be substantially uniform within the interpolation block. Before interpolation according to the embodiment, the input trace data should be verified to ensure a sufficient quantity and that the traces are well distributed. According to a further embodiment, the interpolation windows can be moved, and/or expanded in such regions to minimize edge like artifacts.

Following interpolation, i.e., in method steps 820 and/or 1114, some additional processing can be used to enhance interpolation quality. According to a further embodiment, additional noise removal processes can be implemented, such as prediction error filters or curvelets domain filtering to target noise on interpolated traces before outputting final results.

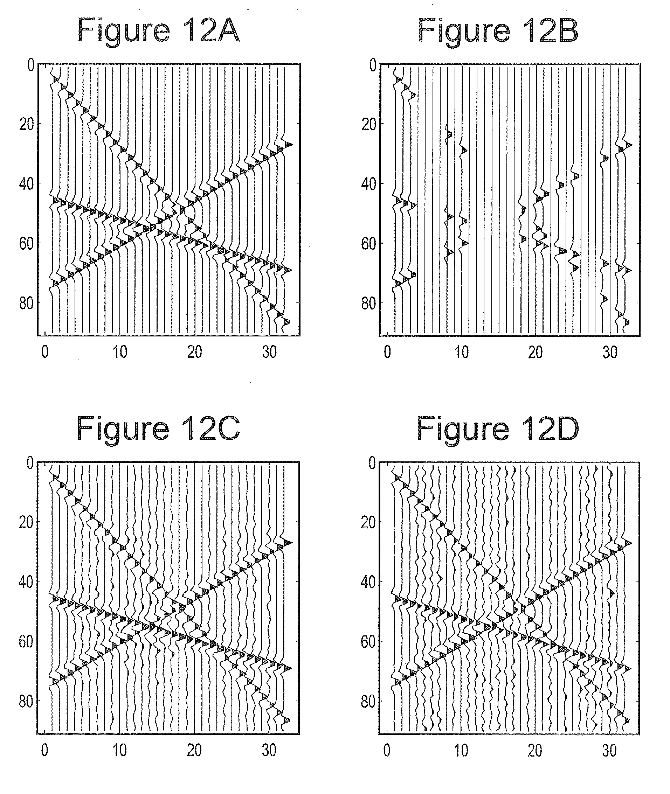

The methods described herein according to an embodiment for 5D anti-aliasing matching pursuit seismic data interpolation (which collectively refers to both methods 800 and 1100) were tested on a small synthetic dataset containing three linear events, one of which is deliberately steep to test the anti-aliasing capability. Figure 12A illustrates the original synthetic data, with 32 traces, and Figure 12B illustrates the same data set with 19 traces randomly deleted. Figure 12C is an interpolation result using the approach discussed in an article by Naghizadeh, M., et al., 2007, entitled "Multistep Autoregressive Reconstruction (MSAR) of Seismic Records," and published by Geophysics, 72, V111-E118. The MSAR approach is a combination of an MWNI interpolation method of low frequencies and a prediction error filter applied to high frequencies. The results of interpolation of the data of Figure 12B using 5D anti-aliasing matching pursuit seismic data interpolation according to an embodiment are shown in Figure 12D.

The interpolation results of both MSAR and 5D anti-aliasing matching pursuit seismic data interpolation according to an embodiment are both fairly good, and both methods are able to reconstruct three linear events, including the steeply dipping one. Despite its relative simplicity, however, 5D anti-aliasing matching pursuit seismic data interpolation according to an embodiment compares fairly well against the much more sophisticated MSAR method. The presence of some inconsequential noise can be removed by additional post-interpolation processing as described generally above.

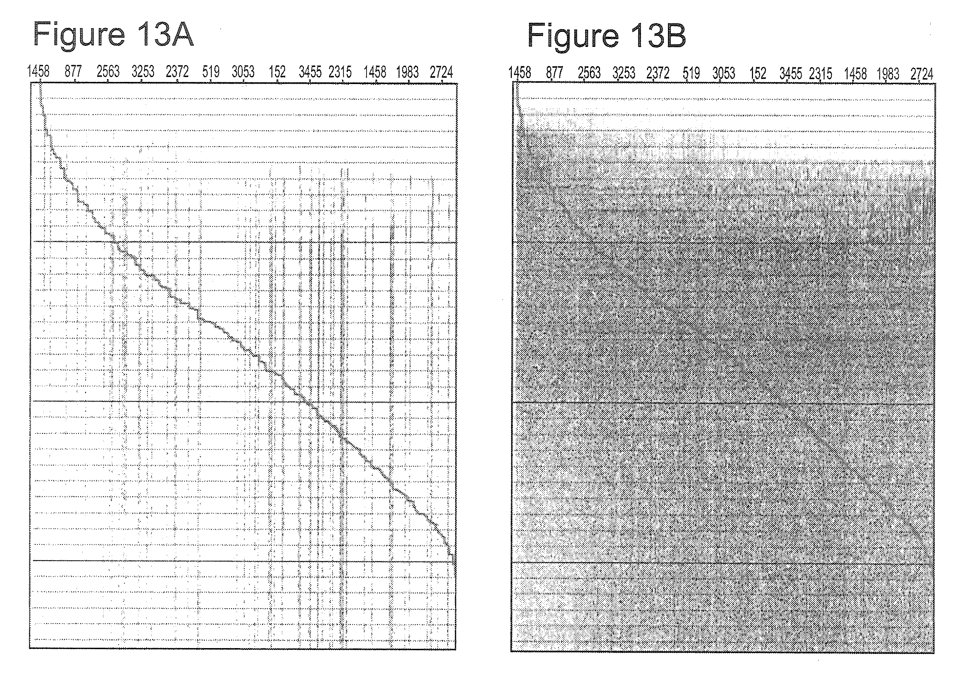

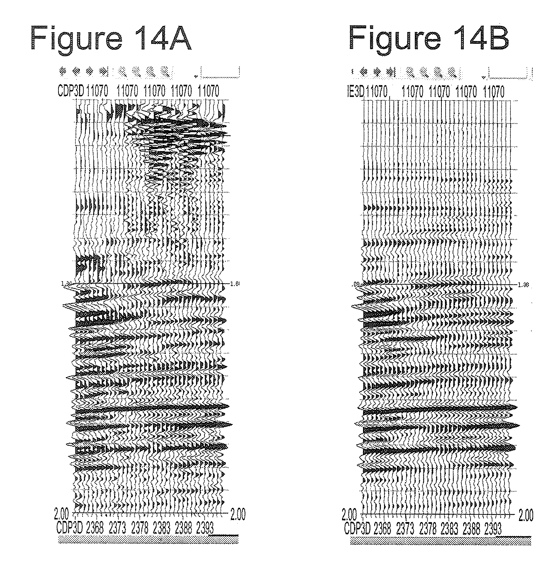

Figures 13 and 14 illustrate the results of application of a 5D anti-aliasing matching pursuit seismic data interpolation method according to an embodiment to field data. Real pre-stack 3D land dataset, sparsely sampled was input to 5D anti-aliasing matching pursuit seismic data interpolation method according to an embodiment in mid-point and orthogonal offset coordinate space. The bin size was 15m by 15 m, with in-line offsets ranging between $\pm 1500$ m, and cross-line offsets of $\pm 2700$ m. The output offset sampling was requested at regular 150 m intervals in the two orthogonal directions, resulting in 21 by 37 traces, i.e. a maximum fold of 777. On average the number of output traces was about 5 times more than the number of input traces. Figure 13 illustrates a 3D gather before (Fig. 13A) and after (Fig. 13B) application of the 5D anti-aliasing matching pursuit seismic data interpolation method according to an embodiment, wherein traces are ordered by absolute radial offset distance. As can be seen, the input traces were sparsely distributed. As those of skill in the art could appreciate, a conventional 3D interpolation algorithm would not be able to interpolate such an under-sampled dataset. However, the 5D anti-aliasing matching pursuit seismic data interpolation method according to an embodiment is able to fill in all the missing data. Where there are input traces, the interpolated traces converge towards the live traces.

Figures 14A and 14B illustrate stacks prior to, and after, use of the 5D anti-aliasing matching pursuit seismic data interpolation method according to an embodiment. The stack results of using the 5D anti-aliasing matching pursuit seismic data interpolation method according to an embodiment shows a significantly better signal-to-noise ratio (SNR) with most of the character being retained from the sparse input data. The noise burst in the shallow data is successfully removed because 5D anti-aliasing matching pursuit seismic data interpolation method according to an embodiment does not find enough 'coherency' in nearby traces to produce a meaningful event.

The 5D anti-aliasing matching pursuit seismic data interpolation method according to an embodiment described herein is able to match interpolation results from much more complex methods, such as MSAR in synthetic 2D testing. Both methods 800 and 1100 have an inherent simplicity that permits easier implementation. Furthermore, as can be appreciated by those of skill in the art, the 5D anti-aliasing matching pursuit seismic data interpolation method according to an embodiment strikes a balance between the formulation as an optimal weighted normed inverse problem as in MWNI, and the intuitive but non-optimal approach such as ALFT and POCS.

The 5D anti-aliasing matching pursuit seismic data interpolation method according to an embodiment makes full use of the fact that the Fourier basis functions are the same for all frequency slices. Furthermore, the 5D anti-aliasing matching pursuit seismic data interpolation method according to an embodiment requires no binning, and traces are used at their actual physical coordinates. Still further the 5D anti-aliasing matching pursuit seismic data interpolation method according to an embodiment reproduces original live traces and does not include smoothing, which requires additional pre- or post-processing. This is a crucial advantage for applications that require amplitude information, such as Amplitude Versus Offset (AVO) and Amplitude Versus Azimuth (AVAz) analysis.

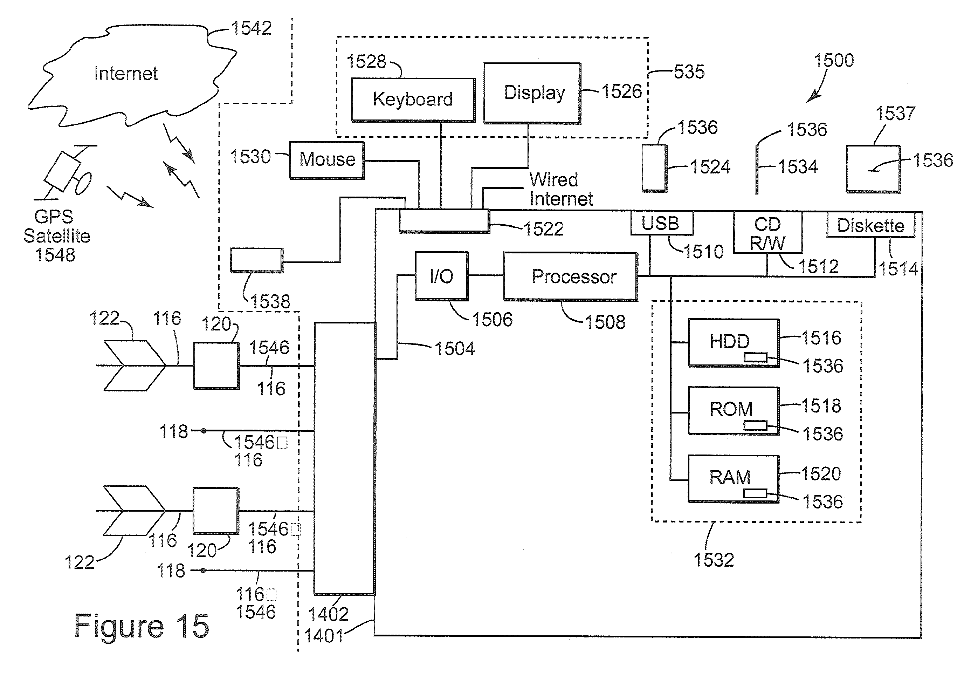

Figure 15 illustrates marine seismic data recording/processing system 1500 suitable for use to implement the 5D anti-aliasing matching pursuit seismic data interpolation method according to an embodiment. Marine seismic data recording/processing system 1500 includes, among other items, server 1501, source/receiver interface 1502, internal data/communications bus (bus) 1504, processor(s) 1508 (those of ordinary skill in the art can appreciate that in modem server systems, parallel processing is becoming increasingly prevalent, and whereas a single processor would have been used in the past to implement many or at least several functions, it is more common currently to have a single dedicated processor for certain functions (e.g., digital signal processors) and therefore could be several processors, acting in serial and/or parallel, as required by the specific application), universal serial bus (USB) port 1510, compact disk (CD)/digital video disk (DVD) read/write (R/W) drive 1512, floppy diskette drive 1514 (though less used currently, many servers still include this device), and data storage unit 1532.

Data storage unit 1532 itself can comprise hard disk drive (HDD) 1516 (these can include conventional magnetic storage media, but, as is becoming increasingly more prevalent, can include flash drive-type mass storage devices 1524, among other types), ROM device(s) 1518 (these can include electrically erasable (EE) programmable ROM (EEPROM) devices, ultra-violet erasable PROM devices (UVPROMs), among other types), and random access memory (RAM) devices 1520. Usable with USB port 1510 is flash drive device 1524, and usable with CD/DVD R/W device 1512 are CD/DVD disks 1534 (which can be both read and write-able). Usable with diskette drive device 1514 are floppy diskettes 1537. Each of the memory storage devices, or the memory storage media (1516, 1518, 1520, 1524, 1534, and 1537, among other types), can contain parts or components, or in its entirety, executable software programming code (software) 1536 that can implement part or all of the portions of the method described herein. Further, processor 1508 itself can contain one or different types of memory storage devices (most probably, but not in a limiting manner, RAM memory storage media 1520) that can store all or some of the components of software 1536.

In addition to the above described components, system 1500 also comprises user console 1535, which can include keyboard 1528, display 1526, and mouse 1530. All of these components are known to those of ordinary skill in the art, and this description includes all known and future variants of these types of devices. Display 1526 can be any type of known display or presentation screen, such as liquid crystal displays (LCDs), light emitting diode displays (LEDs), plasma displays, cathode ray tubes (CRTs), among others. User console 1535 can include one or more user interface mechanisms such as a mouse, keyboard, microphone, touch pad, touch screen, voice-recognition system, among other inter-active inter-communicative devices.

User console 1535, and its components if separately provided, interface with server 1501 via server input/output (I/O) interface 1522, which can be an RS232, Ethernet, USB or other type of communications port, or can include all or some of these, and further includes any other type of communications means, presently known or further developed. System 1500 can further include communications satellite/global positioning system (GPS) transceiver device 1538 (to receive signals from GPS satellites 1548), to which is electrically connected at least one antenna 240 (according to an embodiment, there would be at least one GPS receive-only antenna, and at least one separate satellite bi-directional communications antenna). System 1500 can access internet 1542, either through a hard wired connection, via I/O interface 1522 directly, or wirelessly via antenna 124, and transceiver 1538.

Server 1501 can be coupled to other computing devices, such as those that operate or control the equipment of ship 2, via one or more networks. Server 1501 may be part of a larger network configuration as in a global area network (GAN) (e.g., internet 1542), which ultimately allows connection to various landlines.

According to a further embodiment, marine seismic data recording/processing system 1500, being designed for use in seismic exploration, will interface with one or more sources 118 and one or more receivers 120 These, as previously described, are attached to streamers 116 to which are also attached birds 122 that are useful to maintain positioning. As further previously discussed, sources 118 and receivers 120 can communicate with server 1501 either through an electrical cable that is part of streamer 116, or via a wireless system that can communicate via antenna 124 and transceiver 1538 (collectively described as communications conduit 1546).

According to further embodiments, user console 1535 provides a means for personnel to enter commands and configuration into marine seismic data recording/processing system 126 (e.g., via a keyboard, buttons, switches, touch screen and/or joy stick). Display device 1526 can be used to show: streamer 116 position; visual representations of acquired data; source 118 and receiver 120 status information; survey information; and other information important to the seismic data acquisition process. Source and receiver interface unit 1502 can receive the hydrophone seismic data from receiver 120 though streamer communication conduit 1546 (discussed above) that can be part of streamer 116, as well as streamer 116 position information from birds 122; the link is bi-directional so that commands can also be sent to birds 122 to maintain proper streamer positioning. Source and receiver interface unit 1502 can also communicate bi-directionally with sources 118 through the streamer communication conduit 1546 that can be part of streamer 116. Excitation signals, control signals, output signals and status information related to source 118 can be exchanged by streamer communication conduit 1546 between marine seismic data recording/processing system 1500 and source 118.

Bus 1504 allows a data pathway for items such as: the transfer and storage of data that originate from either the source sensors or streamer receivers; for processor 1508 to access stored data contained in data storage unit memory 1532; for processor 1508 to send information for visual display to display 1526; or for the user to send commands to system operating programs/software 1536 that might reside in either the processor 1508 or the source and receiver interface unit 1502.

Marine seismic data recording/processing system 1500 can be used to implement the 5D anti-aliasing seismic data interpolation method according to an embodiment. Hardware, firmware, software or a combination thereof may be used to perform the various steps and operations described herein. According to an embodiment, software 1536 for carrying out the above discussed steps can be stored and distributed on multi-media storage devices such as devices 1516, 1518, 1520, 1524, 1534, and/or 1537 (described above) or other form of media capable of portably storing information (e.g., universal serial bus (USB) flash drive 1524). These storage media may be inserted into, and read by, devices such as the CD-ROM drive 1512, disk drives 1514, 1516, among other types of software storage devices.

It should be noted in the embodiments described herein that these techniques can be applied in either an "offline", e.g., at a land-based data processing center or an "online" manner, i.e., in near real time while on-board the seismic vessel. For example, data processing including interpolation using the 5D anti-aliasing matching pursuit seismic data interpolation method according to an embodiment can occur as the seismic data is recorded on-board the seismic vessel 102. In this case, it is possible for data generated by the 5D anti-aliasing matching pursuit seismic data interpolation method according to an embodiment to be measured as an indication of the quality of the sampling run.

As also will be appreciated by one skilled in the art, the various functional aspects of the embodiments may be embodied in a wireless communication device, a telecommunication network, as a method or in a computer program product. Accordingly, the embodiments may take the form of an entirely hardware embodiment or an embodiment combining hardware and software aspects. Further, the embodiments may take the form of a computer program product stored on a computer-readable storage medium having computer-readable instructions embodied in the medium. Any suitable computer-readable medium may be utilized, including hard disks, CD-ROMs, digital versatile discs (DVDs), optical storage devices, or magnetic storage devices such a floppy disk or magnetic tape. Other non-limiting examples of computer-readable media include flash-type memories or other known types of memories.

Further, those of ordinary skill in the art in the field of the embodiments can appreciate that such functionality can be designed into various types of circuitry, including, but not limited to field programmable gate array structures (FPGAs), application specific integrated circuitry (ASICs), microprocessor based systems, among other types. A detailed discussion of the various types of physical circuit implementations does not substantively aid in an understanding of the embodiments, and as such has been omitted for the dual purposes of brevity and clarity. However, as well known to those of ordinary skill in the art, the systems and methods discussed herein can be implemented as discussed, and can further include programmable devices.

Such programmable devices and/or other types of circuitry as previously discussed can include a processing unit, a system memory, and a system bus that couples various system components including the system memory to the processing unit. The system bus can be any of several types of bus structures including a memory bus or memory controller, a peripheral bus, and a local bus using any of a variety of bus architectures. Furthermore, various types of computer readable media can be used to store programmable instructions. Computer readable media can be any available media that can be accessed by the processing unit. By way of example, and not limitation, computer readable media can comprise computer storage media and communication media. Computer storage media includes volatile and non-volatile as well as removable and non-removable media implemented in any method or technology for storage of information such as computer readable instructions, data structures, program modules or other data. Computer storage media includes, but is not limited to, RAM, ROM, EEPROM, flash memory or other memory technology, CDROM, digital versatile disks (DVD) or other optical disk storage, magnetic cassettes, magnetic tape, magnetic disk storage or other magnetic storage devices, or any other medium which can be used to store the desired information and which can be accessed by the processing unit. Communication media can embody computer readable instructions, data structures, program modules or other data in a modulated data signal such as a carrier wave or other transport mechanism and can include any suitable information delivery media.

The system memory can include computer storage media in the form of volatile and/or non-volatile memory such as read only memory (ROM) and/or random access memory (RAM). A basic input/output system (BIOS), containing the basic routines that help to transfer information between elements connected to and between the processor, such as during start-up, can be stored in memory. The memory can also contain data and/or program modules that are immediately accessible to and/or presently being operated on by the processing unit. By way of non-limiting example, the memory can also include an operating system, application programs, other program modules, and program data.

The processor can also include other removable/non-removable and volatile/non-volatile computer storage media. For example, the processor can access a hard disk drive that reads from or writes to non-removable, non-volatile magnetic media, a magnetic disk drive that reads from or writes to a removable, non-volatile magnetic disk, and/or an optical disk drive that reads from or writes to a removable, non-volatile optical disk, such as a CD-ROM or other optical media. Other removable/non-removable, volatile/non-volatile computer storage media that can be used in the operating environment include, but are not limited to, magnetic tape cassettes, flash memory cards, digital versatile disks, digital video tape, solid state RAM, solid state ROM and the like. A hard disk drive can be connected to the system bus through a non-removable memory interface such as an interface, and a magnetic disk drive or optical disk drive can be connected to the system bus by a removable memory interface, such as an interface.

The embodiments discussed herein can also be embodied as computer-readable codes on a computer-readable medium. The computer-readable medium can include a computer-readable recording medium and a computer-readable transmission medium. The computer-readable recording medium is any data storage device that can store data which can be thereafter read by a computer system. Examples of the computer-readable recording medium include read-only memory (ROM), random-access memory (RAM), CD-ROMs and generally optical data storage devices, magnetic tapes, flash drives, and floppy disks. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to, when implemented in suitable electronic hardware, accomplish or support exercising certain elements of the appended claims can be readily construed by programmers skilled in the art to which the embodiments pertains.

The disclosed embodiments provide a source array, computer software, and method for 5D anti-aliasing seismic interpolation by matching pursuit. It should be understood that this description is not intended to limit the embodiments. On the contrary, the embodiments are intended to cover alternatives, modifications, and equivalents, which are included in the spirit and scope of the embodiments as defined by the appended claims. Further, in the detailed description of the embodiments, numerous specific details are set forth to provide a comprehensive understanding of the claimed embodiments. However, one skilled in the art would understand that various embodiments may be practiced without such specific details.

Although the features and elements of the embodiments are described in the embodiments in particular combinations, each feature or element can be used alone, without the other features and elements of the embodiments, or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

The above-described embodiments are intended to be illustrative in all respects, rather than restrictive, of the embodiments. Thus the embodiments are capable of many variations in detailed implementation that can be derived from the description contained herein by a person skilled in the art. No element, act, or instruction used in the description of the present application should be construed as critical or essential to the embodiments unless explicitly described as such. Also, as used herein, the article "a" is intended to include one or more items.

All United States patents and applications, foreign patents, and publications discussed above are hereby incorporated herein by reference in their entireties.

**Claims**

1. A method for generating 5D interpolated seismic data using a fast matching pursuit (FMP) algorithm, comprising:

obtaining (806) a block *of Np* irregular trace data, and defining $N_k$ to be a desired number of regular trace data;
estimating (808) a conjugate of a Gram Matrix **G\*** with size $Np$ x $N_k$, using said $Np$ block of irregular traces;
transforming (810) said obtained irregular trace data from a *t-x* domain to an *f-x* domain;
estimating (812) a first set of frequency slices $f_1$ in an *f-k* domain of the transformed trace data using a fast MP algorithm that uses **G\***, wherein $f_1$ is for low frequency values only;
estimating (814) an anti-aliasing mask *M* based on said first set of frequency slices $f_1$;
estimating (816) a second set of frequency slices $f_2$ using the fast MP algorithm using **G\*** and the anti-aliasing mask M, wherein $f_2$ includes all frequencies up to and including a Nyquist frequency of the transformed trace data; and
determining (818) $N_k$ interpolated trace data by reverse transforming $f_2$ from the *f-k* domain to the *t-x* domain using an inverse 5D fast Fourier Transform.

2. The method according to claim 1, wherein step (a) of obtaining a block *of Np* irregular trace data comprises:

transmitting seismic waves from one or more sources; and
receiving said transmitted seismic waves, and storing the same as irregular trace data.

3. The method according to claim 2, further comprising:

defining said stored irregular trace data into a plurality of interpolation windows; and
performing a pre-processing step of moving and/or expanding said plurality of interpolation windows to substantially minimize edge-like artifacts.

4. The method according to claim 1, wherein said step of estimating a conjugate of a Gram Matrix **G\*** with size $Np$ x $N_k$, using saidNp block of irregular traces comprises:

determining a matrix $\Phi$ of size $Np$ x $N_k$ by $N_k$ column vectors $\varphi_k$, wherein $\varphi_k$ is an exponential wave function k evaluated at $x_l$, wherein $x_l$ is defined as an instantaneous value of said irregular trace data at a particular point in time;
determining a conjugate of the matrix $\Phi$, $\Phi^*$; and
determining **G\*** according to the following expression-

$$\boldsymbol{G^* = \Phi^*\Phi}.$$

5. The method according to claim 1, further comprising:

increasing a signal-to-noise ratio of said interpolated data by removal of noise from said obtained trace data by determining there to be a lack of coherency between nearby traces containing said noise.

6. The method according to claim 1, wherein
said interpolation occurs without binning of trace data, and further wherein
said trace data are used at their actual physical coordinates.

7. The method according to claim 1, wherein
said interpolation reproduces original trace data, and further wherein
said interpolation does not substantially smooth said original or interpolated trace data.

8. The method according to claim 1, wherein said step of estimating a first set of frequency slices $f_1$ using a fast MP algorithm that uses **G\***, wherein $f_1$ is for low frequency values only comprises:

initializing a counter *n;*
determining a set of dirty frequency components, $F_D(n)$, in the *f-k* Domain, from the regular trace data, in the *t-*

*x* domain;

defining $F_R(n)$ as a first set of frequency slices $f_1$ of a regular spectrum, and setting $F_R(n) = 0$;

obtaining a maximum value of the frequency components, $F_{D-max}(n)$, and determining its associated location in the set of dirty frequency components;

placing $F_{D-max}(n)$ into a regular spectrum set of $F_R(n)$ at a location in the regular spectrum set that is the same as the associated location in the set of dirty frequency components;

obtaining a column of $G^*(n)$ that corresponds to $F_{D-max}(n)$, and multiplying the G*(n) column by $F_{D-max}(n)$ to obtain $G^*_{mod}(n)$;

incrementing the counter;

subtracting $G^*_{mod}(n)$ from $F_D(n-1)$ to obtain $F_D(n)$; and

determining whether there are any new $F_{D-max}(n)$ values, and if yes repeating said steps of determining any new $F_{D-max}(n)$ values until there are no new $F_{D-max}(n)$ values.

9. The method according to claim 8, wherein $F_D(n)$ is calculated according to the following expression:

$F_D(n) = \Phi \times d$, wherein *d* is a Fourier transform value of a frequency slice of said irregular trace data, and $F_{D(n)}$ is in the *f-k* domain.

10. The method according to claim 1, wherein said step of estimating an anti-aliasing mask *M* based on said first set of frequency slices $f_1$ comprises:

defining an initial anti-aliasing mask $M_0$ and setting a previous anti-aliasing Mask $M_{Prev}$ equal to said initial-anti aliasing mask $M_0$;

determining an initial residual spectrum $RS_0$ and setting a previous residual spectrum $RS_{Prev}$ equal to said initial residual spectrum $RS_0$;

multiplying said previous anti-aliasing mask $M_{Prev}$ by said previous residual spectrum $RS_{Prev}$ to determine a residual spectrum-mask product *RSMP* matrix;

determining a maximum value, $RSMP_{Max\_Val}$, and corresponding position, $RSMP_{Max\_Pos}$, within said *RSMP* matrix,

determining a column in the previously determined conjugate of said Gram Matrix G*, G*_column, that corresponds to $RSMP_{Max\_Pos}$, and obtaining wavenumbers from said corresponding G* column;

determining a new residual spectrum $RS_{New}$, according to the following expression:

$$RS_{New} = RS - [(\alpha) \times (RSMP_{Max\_Val}) \times (G^*\_column)],$$

where $\alpha$ is a user set variable; and

determining that the new anti-aliasing mask M is equal to $RS_{New}$ when $[(\alpha) \times (RSMP_{Max\_Val}) \times (G^*\_column)]$ is greater than a threshold T, and

when $[(\alpha) \times (RSMP_{Max\_Val}) \times (G^*\_column)]$ is less than or equal to the user set threshold T,

setting said anti-aliasing Mask $M_{Prev}$ equal to $RS_{Prev}$, setting $RS_{Prev}$ equal to $RS_{New}$, and determining a new residual spectrum $RS_{New}$ by repeating said steps of determining a residual spectrum-mask product, determining maximum values and positions within said *RSMP* matrix, and determining a corresponding column within said G*, until said newly determined $RS_{New}$ is greater than the threshold T, or the iteration has reached a maximum number of iterations N.

11. The method according to claim 10, wherein the number of iterations N are set by a user, and wherein said threshold T is determined by randomly selecting K trace data, wherein K is set by a user, and averaging said randomly selected K trace data to determine said threshold *T*.

12. The method according to claim 10, wherein
G* is calculated by determining a matrix $\Phi$ of size $Np \times N_k$ by $N_k$ column vectors $\varphi_k$, wherein $\varphi_k$ is an exponential wave function *k* evaluated at $x_l$, wherein $x_l$ is defined as an instantaneous value of said irregular trace data at a particular point in time;

determining a conjugate of the matrix $\Phi$, $\Phi^*$; and

determining **G*** according to the following expression-

$$G^* = \Phi^*\Phi.$$

13. The method according to claim 10, wherein the initial residual spectrum is determined according to the following expression:

$$\tilde{f}^m = \Phi^* R^m f;$$

where $\Phi^*$ is the Conjugate of $\Phi$, and
said residual spectrum, $RS_M$ is equal to $R^m f$.

14. A method for generating interpolated seismic data, comprising:

estimating (1120) a first frequency spectrum for seismic data using a matching point (MP) algorithm having a pre-computed term;
estimating (1122) a second frequency spectrum of said seismic data, using said MP algorithm, an anti-aliasing mask and said estimated first frequency spectrum; and
determining (1124) the interpolated seismic data by performing an inverse fast Fourier Transform on said second estimated frequency spectrum.

15. A system for generating interpolated seismic data, comprising:

at least one processor configured to estimate (1120) a first frequency spectrum for seismic data using a matching point (MP) algorithm having a pre-computed term, to estimate (1122) a second frequency spectrum of said seismic data, using said MP algorithm, an anti-aliasing mask and said estimated first frequency spectrum; and to determining (1124) the interpolated seismic data by performing an inverse fast Fourier Transform on said second estimated frequency spectrum.

Figure 1

Figure 2

# Figure 3

300

302

Positioning/Surveying

304

Seismic Energy Source

306

Data Recording

308

Data Processing

310

Data Interpretation

# Figure 4

Residual energy $|R^m f|$

Figure 5

Reconstructed Freq. spectrum

# Figure 6A

## Original traces

# Figure 6B

## Input traces

# Figure 6C

## Interpolated traces

Figure 7B

Figure 7A

# Figure 8

800                                    ┌─802

┌──────────────────────────────────────────────────────────┐
│              Transmitting Seismic Waves                    │
│              (marine or land) by sources                   │
└──────────────────────────────────────────────────────────┘
                          ↓                    ┌─804
┌──────────────────────────────────────────────────────────┐
│          Acquiring Transmitted Seismic Waves as Trace Data │
│ (Receiving by Receiver, Processing with Processors, and Storing in Memory) │
└──────────────────────────────────────────────────────────┘
                          ↓                    ┌─806
┌──────────────────────────────────────────────────────────┐
│ Obtain a Block of $N_p$ Irregular Trace Data, and Define $N_k$ to be a │
│          Desired Number of Regular Trace Data              │
└──────────────────────────────────────────────────────────┘
                          ↓                    ┌─808
┌──────────────────────────────────────────────────────────┐
│ Obtain $\Phi = N_k$ Column Vectors $\Phi_k$, and Estimate a Conjugate of a │
│          Gram Matrix $G^*$ with Size $N_k \times N_k$,     │
│ Using said N  Block of Irregular Traces, Where each Vector $\Phi_k$ │
│ is the Fourier Complex Exponential Function of Regular Frequencies │
│          Estimated at $N_p$ Irregular Sampling Points      │
└──────────────────────────────────────────────────────────┘
                          ↓                    ┌─810
┌──────────────────────────────────────────────────────────┐
│      Transform Signal Data from a t-x Domain to an f-x Domain │
└──────────────────────────────────────────────────────────┘
                          ↓                    ┌─812
┌──────────────────────────────────────────────────────────┐
│      Estimate a First Set of Frequency Slices $f_1$ using a Fast MP │
│ Algorithm that uses $G^*$, wherein $f_1$ is for Signal Frequency Values │
│          Only, and is in the f-k Domain                    │
└──────────────────────────────────────────────────────────┘
                          ↓                    ┌─814
┌──────────────────────────────────────────────────────────┐
│ Estimate an Anti-aliasing Mask M Based on said First Set of Frequency │
│                      Slices $f_1$                          │
└──────────────────────────────────────────────────────────┘
                          ↓                    ┌─816
┌──────────────────────────────────────────────────────────┐
│ Estimate a Second Set of Frequency Slices $f_2$ Using the Fast MP │
│ Algorithm Using $G^*$ and the Anti-Aliasing Mask M, wherein $f_2$ │
│ Includes all Frequencies up to and Including a Nyquist Frequency │
│          of the Transformed Trace Data                     │
└──────────────────────────────────────────────────────────┘
                          ↓                    ┌─818
┌──────────────────────────────────────────────────────────┐
│ Determining Interpolated Data by Reverse Transforming $f_2$ from the │
│ f-k Domain to the t-x Domain Using an Inverse 5D Fast Fourier │
│          Transform (f-k to t-x)                            │
└──────────────────────────────────────────────────────────┘
                          ↓                    ┌─820
┌──────────────────────────────────────────────────────────┐
│ Perform Further Processing and/or Displaying of Said interpolated │
│                      Trace Data                            │
└──────────────────────────────────────────────────────────┘

# Figure 9

900

**902**
Set n=1

**904**
Determine Set of Dirty Frequency Coefficients, $F_D(n)$, in f-k Domain, from the Regular Trace Data, in the t-x Domain
d=Fourier Transform of Regular Trace Data (f-x domain); and
$F_D(n) = \Phi \times d$(f-k domain)

**906**
Define $F_R$ as the Set of Frequency Coefficients of the Regular Spectrum (the Complete Interpolated Data Set); and set
$F_R(n) = 0$

**908**
Obtain $F_{D\text{-}max}(n)$ from $F_D(n)$

**910**
Place $F_{D\text{-}max}(n)$ into $F_R(n)$, at Same Location as $F_{D\text{-}max}$ was Located

**912**
Find Column of $G^*$ that Corresponds to $F_{D\text{-}max}(n)$ and Multiply by $F_{D\text{-}max}(n)$;
$G^*_{modified}(n) = G^*(n) \times F_{D\text{-}max}(n)$

**914**
$n = n + 1$

**916**
$F_D(n) = F_D(n-1) - G^*_{modified}(n)$

**918**
Any New $F_{D\text{-}max}$ ?

N

**920**
$F_R(n)$= Set of Regular Frequency Slices, in f-k Domain

# Figure 10

1000-A method for Determining an
Anti-Aliasing Mask
⌐1002

Set Initial Anti-Aliasing Mask, AA Mask$_0$ to all 1's;
Set counter m to 1 and Determine Iteration Counter Limit N, where N is set by User:
Determine Threshold, T according to a random selection of K trace data points, transformed to f-k domain, and obtain average, where K is selected by User;
Set Factor $\alpha=1$; Can be set by User (0-1) Depending on Amount of Noise Predicted to be in Trace Data;
Obtain $\Phi^*$, the Conjugate of $\Phi$, from Method 800, step 808
Obtain $G^*$ According to Equation (6A): $G^* = \Phi^* \Phi$

⌐1004

Determine Initial Residual Spectrum According to the Following
$\tilde{f}^m = \Phi^* R^m f$ ;
Where $\Phi^*$ is the Conjugate of $\Phi$, and
Residual Spectrum, $RS_M = R^m f$

⌐1006

Multiply AA Mask$_{M-1}$ against Residual Spectrum ($RS_M$)
= RS-Mask Product = $RSMP_M$

⌐1008

Find the Maximum Value and Corresponding Position
in RS-Mask Product:
Max_Val($RSMP_M$) & Corresponding
Max_Pos($RSMP_M$)

⌐1010

Find the Column in $G^*$ that Corresponds to the Max_Pos($RSMP_M$):
Obtain wavenumbers form $G^*$ Column = $G^*\_column_M$

N | 1018

m=m+1 | Y → Done

⌐1012

Determine New Residual Spectrum
$RS_{M+1} = RS_M - [(\alpha) \times (Max\_Val(RSMP_M)) \times (G^*\_column_M)]$
Where,
Max_Val ($RSMP_M$) is determined in step 1008; and
$G^*\_column_M$ is determined in step 1010

1016

m=m+1

⌐1014

Determine if a Stopping Criteria Has Been Satisfied:
Is $(\alpha) \times (Max\_Val (RSMP_M)) \times (G^*\_column_M)$ Greater than T?
If yes, use $RS_{M+1}$ as Anti-aliasing Mask;
If No, Set AA Mask$_M$ Equal to $RS_M$, and Proceed to step 1018

N

Y

Done

# Figure 11A

1102

Transmitting Seismic Waves
(marine or land) by sources

1104

Acquiring Transmitted Seismic Waves as Trace Data
(Receiving by Receiver, Processing with Processors, and Storing in Memory)

1106

Estimating a Regular Frequency Spectrum for Irregular Seismic
Data Using a Fast Matching Point (MP) Algorithm

1108

Determining an Anti-Aliasing Mask Based on the Estimated
Regular Frequency Spectrum

1110

Re-estimating the Regular Frequency Spectrum of the Irregular
Seismic Data, Using the Fast MP Algorithm and the Anti-Aliasing Mask

1112

Determining the 5D Interpolated Data by Performing Inverse Fast
Fourier Transform on the Re-estimated, Regular Frequency Spectrum

1114

Performing Additional Processing and/or Displaying of Interpolated Data

# Figure 11B

┌─────────────────────────────────────────────────────────────┐ ⌐1120
│                                                               │
│   Estimate first frequency spectrum using an MP algorithm having a │
│                     pre-computed term                         │
│                                                               │
└─────────────────────────────────────────────────────────────┘
                              │
                              ▼
┌─────────────────────────────────────────────────────────────┐ ⌐1122
│                                                               │
│   Estimate second frequency spectrum using the MP algorithm, and │
│        anti-aliasing mask and the first frequency spectrum    │
│                                                               │
└─────────────────────────────────────────────────────────────┘
                              │
                              ▼
┌─────────────────────────────────────────────────────────────┐ ⌐1124
│                                                               │
│   Determine interpolated seismic data by performing an inverse fast │
│    Fourier transform on the second estimated frequency spectrum │
│                                                               │
└─────────────────────────────────────────────────────────────┘

## Figure 12A

## Figure 12B

## Figure 12C

## Figure 12D

Figure 13A

Figure 13B

Figure 14A    Figure 14B

Figure 15

EP 2 784 551 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 61805259 A

### Non-patent literature cited in the description

- **SPITZ, S.** Seismic Trace Interpolation in the f-x Domain. *Geophysics,* 1991, vol. 56, 785-794
- **TRAD, D.** Five-Dimensional Interpolation: Recovering From Acquisition Constraints. *Geophysics,* 2009, vol. 74, V123-V132
- **GULUNAY, N.** Seismic Trace Interpolation in the Fourier Transform Domain. *Geophysics,* 2003, vol. 68, 355-369
- **LIU, B. et al.** Minimum Weighted Norm Interpolation of Seismic Records. *Geophysics,* 2004, vol. 69, 1560-1568
- **XU, S. et al.** Anti-leakage Fourier Transform for Seismic Data Regularization. *Geophysics,* 2005, vol. 70, V87-V95
- Anti-Leakage Fourier Transform for Seismic Data Regularization. *Geophysics,* 2005, vol. 70, V87-V95
- **NGUYEN, T. et al.** Seismic Interpolation by Optimally Matched Fourier Component. *SEG International Exposition and 81th Annual Meeting,* 2011, 3085-3089
- **NAGHIZADEH, M. et al.** Multistep Autoregressive Reconstruction (MSAR) of Seismic Records. *Geophysics,* 2007, vol. 72, V111-E118